(19) **Europäisches Patentamt**
**European Patent Office**
**Office européen des brevets**

(11) **EP 3 838 949 A1**

(12) **EUROPÄISCHE PATENTANMELDUNG**

(43) Veröffentlichungstag:
**23.06.2021 Patentblatt 2021/25**

(51) Int Cl.:
***C08G 18/10*** *(2006.01)*    ***C08G 18/32*** *(2006.01)*
***C08G 18/73*** *(2006.01)*

(21) Anmeldenummer: **19216805.2**

(22) Anmeldetag: **17.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR KONTINUIERLICHEN HERSTELLUNG EINES THERMOPLASTISCHEN POLYURETHANS**

(57)     Die vorliegende Erfindung betrifft ein Verfahren zur Herstellung eines thermoplastischen Polyurethans sowie das damit erhaltene thermoplastische Polyurethan und eine Vorrichtung zu dessen Herstellung.

EP 3 838 949 A1

**Beschreibung**

Die vorliegende Erfindung betrifft ein Verfahren zur Herstellung eines thermoplastischen Polyurethans sowie das damit erhaltene thermoplastische Polyurethan und eine Vorrichtung zu dessen Herstellung.

Thermoplastische Polyurethane sind weitgehend unverzweigte Makromoleküle. Sie werden üblicherweise erhalten, indem bifunktionelle Isocyanate, langkettige Diole, wie z.B. Polyether oder Polyester, und Kettenverlängerer miteinander zur Reaktion gebracht werden. Es gibt verschiedene technische Verfahren zur Herstellung von thermoplastischem Polyurethan (TPU), wobei zwischen diskontinuierlichen Batch-Verfahren und kontinuierlichen Verfahren unterschieden wird. Ein kontinuierliches Verfahren ist die Reaktiv-Extrusion, bei der die zur Herstellung dienenden Ausgangsstoffe in einen Extruder eingetragen werden. Die Reaktiv-Extrusion ist von der Verwendung eines Extruders zur reinen Verarbeitung von Kunststoffen zu unterscheiden. Bei der Reaktiv-Extrusion werden die Ausgangsstoffe durch die Drehbewegungen der Schnecke des Extruders vermischt und reagieren miteinander, sodass eine Polymerschmelze erhalten wird. Diese Polymerschmelze wird dann extrudiert und die erhaltenen Extrudat-Stränge, evtl. nach einer Abkühlung in einem Wasserbad, zu Granulat geschnitten oder direkt in eine bestimmte Form gebracht. Bei der Verarbeitung von TPU in einem Extruder wird ein Granulat aus bereits synthetisiertem TPU im Extruder aufgeschmolzen und die Schmelze extrudiert.

Sofern ein TPU erneut geschmolzen wird, können beim Aufschmelzen Inhomogenitäten in der Polymerschmelze dadurch entstehen, dass ein Teil des Granulats schon geschmolzen ist, ein anderer Teil jedoch noch nicht geschmolzen ist. Inhomogene Polymerschmelzen werfen Probleme bei der Verarbeitung im Extruder auf, weil nicht geschmolzene, weitgehend feste oder gelartige Teile langsamer im Extruder bewegt werden als bereits geschmolzenes TPU, das eine weitgehend flüssige oder zähflüssige Polymerschmelze bildet. Die weitgehend festen Teile können sich zudem im Extruder ansammeln und sich schubweise wieder lösen und zu Verunreinigungen der Polymerschmelze führen.

In der industriellen Praxis werden kontinuierliche Herstellungsverfahren bevorzugt, da sich hier Maßstabsvergrößerungen einfacher durchführen lassen und größere Mengen mit konstanter Qualität produziert werden können. Die Verwendung von Lösungsmitteln ist ebenfalls nachteilig, da im Produkt verbleibende Restlösungsmittel in die Umwelt freigesetzt werden können und unerwünschte Eigenschaften wie beispielsweise Geruch, Toxizität und/oder eine Verschlechterung der mechanischen Eigenschaften verursachen können. Die vollständige Entfernung von Restlösungsmitteln aus einem Polymer ist grundsätzlich mit einem erhöhten technischen Aufwand und Energieverbrauch verbunden.

Ein Verfahren zur Herstellung von Polyurethan ist beispielsweise aus der WO01/14441 bekannt. Offenbart wird ein Verfahren zur Herstellung von NCO-, NH- oder OH-terminierten Polyurethanen in einem Statikmischer. Wesentlich für dieses Verfahren ist, dass die Temperatur bei der Umsetzung der Komponenten adiabat geführt wird und/oder der Statikmischer begleitbeheizt ist und damit nur für Verfahren geeignet ist, die endotherm sind oder nur eine geringe Exothermie aufweisen. Für die Umsetzung von Komponenten, die eine hohe Reaktionsenthalphie aufweisen, d.h. deren Umsetzung miteinander stark exotherm verläuft, ist das Verfahren nicht geeignet.

EP0519734 offenbart ein Urethanisierungsreaktionsverfahren, wobei ein Polyolgemisch, enthaltend mindestens ein langkettiges Polyol mit einer maximalen Hydroxylzahl von 10 mg/g KOH, mit einer Polyisocyanat-Komponente zu einem Urethan-modifizierten Harz umgesetzt wird. Die Reaktionsmischung wird in einem Statikmischer bei Temperaturen von 90 °C - 200 °C umgesetzt. Aufgrund der geringen Dichte an funktionellen Gruppen, ist auch hier ein Energieeintrag nötig.

Nachteilig bei den oben beschriebenen Verfahren ist, dass diese sich eher für Reaktionen eignen, die entweder endotherm verlaufen oder nur eine geringe Wärmetönung aufweisen und daher einen konstanten Wärmeeintrag erfordern oder adiabat gefahren werden müssen. Bei Systemen, die eine hohe Wärmetönung der Reaktion aufweisen ($\leq$ -350 kJ/kg), ist der adiabatische Temperaturanstieg problematisch. Ausgehend von Monomeren bei einer Temperatur ausreichend für ein unkatalysiertes Anspringen der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C über einen längeren Zeitraum ist aufgrund der Vielzahl von thermischen Nebenreaktionen problematisch. Eine Temperatur von 300 °C liegt darüber hinaus oberhalb der Ceiling Temperatur der Polyurethanbindung. Die Ceiling Temperatur ist als die Temperatur definiert, bei der die Depolymerisation im Gleichgewicht mit der Polymerisation steht.

Die CN 10 714 1437 bezieht sich auf TPU, das in 3D-Druckverfahren verwendet werden soll. Die Druckschrift offenbart eine Synthese durch Reaktivextrusion und lehrt, dass die Schmelzenthalpie eines TPU durch die Zugabe eines Kettenverlängerers beeinflusst werden kann, wobei der Kettenverlängerer ein Cyclodextrin-Derivat ist.

Die CN 10 500 1626 offenbart ebenfalls ein Verfahren für die Reaktiv-Extrusion von Polyurethan. Die Druckschrift offenbart, dass die Fließeigenschaften des TPU durch Zugabe einer Mischung aus Diphenylsilylglykol und Ethylenglykol beeinflusst werden können.

Die US 2017/145146 bezieht sich auf TPU aus Komponenten, die aus nachwachsenden, pflanzlichen Ressourcen stammen. Die Druckschrift offenbart die Synthese in einem Batch-Verfahren und lehrt, dass die Schmelztemperatur eines TPU unter anderem vom Isocyanat-Index und der Polymerisationszeit abhängt.

Es ist Aufgabe der vorliegenden Erfindung, ein kontinuierliches Verfahren und eine Vorrichtung für die Herstellung eines thermoplastischen Polyurethans bereitzustellen, das es ermöglicht Polyadditionsreaktion mit großer negativer Reaktionsenthalpie / kg Reaktionsmasse im industriellen Maßstab durchzuführen.

Diese Aufgabe wurde gelöst durch ein Verfahren zur kontinuierlichen lösungsmittelfreien Herstellung eines thermoplastischen Polyurethans (F) durch Umsetzung der Komponenten

(α) einem oder mehreren cycloaliphatischen, aliphatischen und/oder araliphatischen Polyisocyanaten,
(β) einem oder mehreren cycloaliphatischen, aliphatischen und/oder araliphatischen Diolen, wobei die Gesamtmenge der Komponente (β) eine Hydroxylzahl im Bereich von 600 mg KOH/g bis 1830 mg KOH/g bestimmt gemäß DIN EN ISO 4629-2:2016 aufweist,
(γ) gegebenenfalls in Gegenwart von einem oder mehreren Katalysatoren, und/oder einem oder mehreren Zusatzstoffen,
umfassend die folgenden Schritte:

a) Mischen eines Polyisocyanatstroms (A) und eines Diolstroms (B) in einer ersten Mischungseinrichtung (5), so dass ein erster Mischungsstrom (C) erhalten wird, wobei die Massenströme des Polyisocyanatstroms (A) und des Diolstroms (B) so eingestellt werden, dass der Isocyanat-Index im Mischungsstrom (C) im Bereich von 55 bis 85 liegt,
b) Einleiten des ersten Mischungsstroms (C) in mindestens einen ersten Statikmischer (6) der mindestens einen Wärmeübertrager aufweist, wobei die Monomere des Polyisocyanatstroms (A) und des Diolstroms (B) in dem mindestens ersten Statikmischer (6) zumindest teilweise zu OH-funktionellen Prepolymeren weiterreagieren,
c) Einleiten des Massestroms aus Verfahrensschritt b) als Prepolymerstrom (D) in einen Extruder (10),
d)Einleiten eines Polyisocyanatzuführungsstroms (E) in den Extruder (10) in Extruderarbeitsrichtung stromabwärts der Einleitung des Prepolymerstroms (D), wobei die Einleitung in der Weise erfolgt, dass die im Prepolymerstrom (D) enthaltenen OH-funktionellen Prepolymere und das im Polyisocyanatzuführungsstrom (E) enthaltene Polyisocyanat in einem Isocyanat-Index im Bereich von 85 bis 120 zueinander stehen,
e) Umsetzen des Prepolymerstroms (D) mit dem Polyisocyanatzuführungsstrom (E) in dem Extruder (10) unter Erhalt des thermoplastischen Polyurethans (F) als Extrudat,

wobei der Isocyanatstrom (A) und der Polyisocyanatzuführungsstrom (E) jeweils unabhängig voneinander die Komponente (α) und gegebenenfalls die Komponente (γ) enthalten und wobei der Diolstroms (B) die Komponente (β) und gegebenenfalls die Komponente (γ) enthält.

Der Vorteil des erfindungsgemäßen Verfahrens besteht darin, dass die Temperatur der Reaktionsmasse bei der erfindungsgemäßer Ausführung sehr gut kontrolliert werden kann und es daher nicht zu wärmebedingten Schädigungen, wie z.B. Stippenbildung oder Verfärbungen im Polyurethanprodukt kommt. Ebenfalls können durch die gute Temperaturkontrolle Nebenreaktionen kontrolliert und gegebenenfalls verhindert oder bevorzugt werden. Denkbar ist beispielsweise eine enge Kontrolle des Allophanatgehalts. Weiterhin ermöglicht das erfindungsgemäße Verfahren eine gute Skalierbarkeit vom Labor in einen industriellen Maßstab.

Das Wort "ein" im Zusammenhang mit zählbaren Größen ist im Rahmen der vorliegenden Erfindung nur dann als Zahlwort zu verstehen, wenn dies ausdrücklich angegeben wird (z. B. durch den Ausdruck "genau ein"). Wenn im Folgenden beispielsweise von "einem Diol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Diolen enthält.

Falls nicht explizit anders angegeben beziehen sich alle Prozentangaben auf das Gewicht (Gew.-%). Die Angabe Gew.-% bezieht sich dabei auf das Gesamtgewicht des jeweiligen Systems oder das Gesamtgewicht der jeweiligen Komponente. Zum Beispiel kann ein Copolymer ein bestimmtes Monomer in Gew.-% angegeben enthalten, in diesem Fall würden sich die Gewichtsprozente auf das Gesamtgewicht des Copolymers beziehen.

Unter einem "lösungsmittelfreien Verfahren" im Rahmen der vorliegenden Erfindung wird die Umsetzung der Komponenten (α) und (β) ohne zusätzliche Verdünnungsmittel, wie beispielsweise organische Lösungsmittel oder Wasser verstanden, d.h. die Komponenten (α) und (β) werden bevorzugt unverdünnt miteinander zur Reaktion gebracht. Die Komponente (γ) kann gegebenenfalls in geeigneten Verdünnungsmittel vorliegen und als Lösung oder Dispersion zu den Komponenten (α) und/oder (β) zugegeben werden. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt. Unter einem Lösungsmittel wird dabei eine Substanz verstanden in der wenigstens eine der Komponenten (α) und (β) und gegebenenfalls (γ) gelöst, dispergiert, suspendiert oder emulgiert werden kann, welche aber nicht mit einer der Komponenten (α) und (β) und gegebenenfalls (γ) oder mit dem/den Prepolymer(en) reagiert.

"Kontinuierliches Verfahren" oder "kontinuierliche Verfahren" im Sinne der Erfindung sind solche, bei denen der Zulauf der Edukte während einer kontinuierlichen Produktion in mindestens einen Apparat und der Austrag der Produkte aus mindestens einem gleichen oder verschiedenen Apparat gleichzeitig, stattfinden, während bei diskontinuierlicher Verfahren der Zulauf der Edukte, die chemische Umsetzung und der Austrag der Produkte in der Regel zeitlich nacheinander ablaufen. Die kontinuierliche Verfahrensweise ist meistens von wirtschaftlichem Vorteil, da Reaktorstillstandszeiten infolge von Befüllungs- und Entleerungsprozessen vermieden werden.

Dem Fachmann ist bekannt, dass in der Polyurethanchemie Polymere und damit auch Prepolymere nicht als isolierte Spezies vorliegen, sondern immer als Gemische von Molekülen verschiedener Anzahl von Wiederholeinheiten und damit unterschiedlichen Molekulargewichten und gegebenenfalls auch unterschiedlicher Endgruppen vorliegen. Sowohl die Anzahl der Wiederholeinheiten pro Molekül als auch gegebenenfalls die Endgruppen sind in der Regel statistisch verteilt.

Im Rahmen der vorliegenden Erfindung wird unter dem Begriff "Diol" jede organische monomere oder polymere Substanz verstanden, die zwei Hydroxylgruppen aufweist, welche in der Lage sind mit einer NCO-Gruppe zu reagieren. Die Diole und / oder deren Vorläuferverbindungen können aus fossilen oder biologischen Quellen gewonnen worden sein.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen.

In Schritt a) des erfindungsgemäßen Verfahrens werden ein Polyisocyanatstrom (A) und ein Diolstrom (B) in einer ersten Mischungseinrichtung (5) miteinander vermischt, so dass ein Mischungsstrom (C) erhalten wird. Dabei enthält oder besteht der Polyisocyanatstrom (A) die Komponente ($\alpha$). Als Komponente ($\alpha$) werden bevorzugt ein oder mehrere aliphatische, cycloaliphatische oder araliphatische monomere Diisocyanate eingesetzt, besonders bevorzugt ein oder mehrere aliphatische und / oder cycloaliphatische monomere Diisocyanate eingesetzt, noch bevorzugter ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus, noch mehr bevorzugt ist, dass als Komponente ($\alpha$) 1,5-Diisocyanatopentan (PDI), 1,6-Diisocyanatohexan (HDI) eingesetzt werden und am Bevorzugtesten dass als Komponente ($\alpha$) 1,6-Diisocyanatohexan (HDI) eingesetzt wird. Der Diolstrom B enthält oder besteht aus der Komponente ($\beta$). Als Komponente ($\beta$) werden bevorzugt ein oder mehrere aliphatische oder cycloaliphatische Diole mit einer Hydroxylzahl im Bereich von 600 mg KOH/g bis 1830 mg KOH/g bestimmt gemäß DIN EN ISO 4629-2:2016, besonders bevorzugt Diole ausgewählt aus der Gruppe bestehend aus 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus, eingesetzt, noch bevorzugter ein oder mehrere aliphatische Diole mit einer Hydroxylzahl im Bereich von 600 mg KOH/g bis 1830 mg KOH/g bestimmt gemäß DIN EN ISO 4629-2:2016 eingesetzt, noch mehr bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, eingesetzt und am bevorzugtesten wird 1,4-Butandiol eingesetzt. Bevorzugt weist der Polyisocyanatstrom (A) eine Temperatur von 20 °C bis 25 °C und unabhängig hiervon der Polyolstrom eine Temperatur von 35 °C bis 45 °C auf. Die Massenströme des Polyisocyanatstroms (A) und des Diolstroms (B) werden so eingestellt, dass der Isocyanat-Index im Mischungsstrom von 55 bis 85 beträgt.

Die im erfindungsgemäßen Verfahren eingesetzten Polyisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden. Die im erfindungsgemäßen Verfahren eingesetzten Polyole und / oder dessen Vorläuferverbindungen können aus fossilen oder biologischen Quellen gewonnen worden sein.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um Werte bestimmt bei 25 °C.

Im erfindungsgemäßen Verfahren können die Komponenten (α) und (β) gegebenenfalls in Gegenwart von einem oder mehreren Katalysatoren, vorzugsweise Schwermetall-freien Katalysatoren, und/oder einem oder mehreren Zusatzstoffen umgesetzt werden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche Schwermetall-freie Katalysatoren.

Im Allgemeinen wird der Katalysator in Mengen von 0,001 Gew.-%bis 2,0 Gew.-%, bevorzugt von 0,005 Gew.-% bis 1,0 Gew.-% besonders bevorzugt von 0,01 Gew.-% bis 0,1 Gew.-% bezogen auf die Diisocyanatkomponente A eingesetzt. Der Katalysator kann in Substanz eingesetzt werden oder gelöst in der Diol-Komponente B. Ein Vorteil ist hierbei, dass die dann erhaltenen Hydroxyterminierten Prepolymere keine Verunreinigungen durch gegebenenfalls mitverwendete Katalysatorlösungsmittel enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie ß-Propiolacton, γ-Butyrolacton, ε-Caprolacton und ε -Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch beim erfindungsgemäßen Verfahren Katalysatorlösungsmittel zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkolmonomethylether, Ethylenglykolmonoethylether, Ethylenglykolmonobutylether, Diethylenglykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

In einer bevorzugten Ausführungsform werden die Komponenten (α) und (β) im erfindungsgemäßen Verfahren ohne einen Katalysator miteinander umgesetzt.

Neben den Komponenten (α) und (β) sowie den Katalysatoren können auch Zusatzstoffe eingesetzt werden. Dabei kann es sich beispielsweise um im Bereich der Polyurethantechnologie gängige Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Zusatzstoffe mehrerer Typen zu verwenden.

In einer bevorzugten Aufführungsform können als Zusatzstoffe auch geringe Mengen aromatischer Diisocyanate eingesetzt werden in Anteilen bis zu 2 Gew.-% bezogen auf die Stoffmenge der Komponente (α). Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin. In einer bevorzugten Ausführungsform werden keine aromatischen Diisocyanate oder aromatische Polyisocyanate im erfindungsgemäßen Verfahren eingesetzt.

In einer anderen bevorzugten Ausführungsform können als Zusatzstoffe in geringen Mengen auch übliche gegenüber Isocyanaten reaktive mono-, di-, tri- oder polyfunktionelle Verbindungen in Anteilen bis zu 2 mol%, bezogen auf das Gesamtgewicht des Prepolymers bzw. der Prepolymere, z. B. als Kettenabbrecher, Hilfsmittel oder Entformungshilfen, eingesetzt werden. Beispielhaft genannt seien Alkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol und Stearylalkohol. Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Amine wie Butylamin und Stearylamin oder Thiole. Diese Zusatzstoffe können bis zu einer Menge zugesetzt werden, bei der die erfindungsgemäßen Grenzen der OH-Funktionalität eingehalten werden.

In einer bevorzugten Aufführungsform können als Zusatzstoffe auch höherfunktionelle Alkohole mit einer Hydroxylzahl von 600 mg KOH/g bis 1830 mg KOH/g, bestimmt gemäß DIN EN ISO 4629-2:2016, eingesetzt werden, insbesondere Triole wie beispielsweise Trimethylolethan, Trimethylolpropan oder Glycerin oder weitere höherfunktionelle Alkohole wie beispielsweise Ditrimethylolpropan, Pentaerythrit oder Dipentaerythrit. In einer bevorzugten Ausführungsform werden keine höherfunktionelle Alkohole mit einer Hydroxylzahl von 600 mg KOH/g bis 1830 mg KOH/g, bestimmt gemäß DIN EN ISO 4629-2:2016 im erfindungsgemäßen Verfahren eingesetzt.

In einer bevorzugten Ausführungsform kann der Diolstrom (B) mit dem Polyisocyanatstrom (A) bereits stromaufwärts der ersten Mischungseinrichtung (5) zusammengeführt werden. In einer anderen Ausführungsform werden der Diolstrom (B) und der Polyisocyanatstrom (A) unabhängig voneinander in die erste Mischungseinrichtung (5) geführt. Bei der ersten Mischungseinrichtung handelt es sich bevorzugt um einen Statikmischer. Als Statikmischer eignen sich alle dem Fachmann bekannten Statikmischer, beispielsweise die Mischer mit angewinkelten Strömungswiderständen, die unter dem Handelsnamen SMX, SMXL, SMV oder SMX Pro (alle Firma Sulzer) bekannt sind, oder gewendelte Mischer vom Typ KM der Firma Chemineer.

In Schritt b) wird der erste Mischungsstrom (C) in mindestens einen ersten Statikmischer (6), der mindestens einen Wärmeübertrager aufweist, eingeleitet, wobei die Monomere des Polyisocyanatstroms (A) und des Diolstroms (B) in dem mindestens ersten Statikmischer (6) zu OH-funktionellen Prepolymeren weiterreagieren.

Die Temperaturen zur Bildung der OH-funktionellen Prepolymere in Schritt b) können in Abhängigkeit von den eingesetzten Verbindungen ausgewählt werden. Bevorzugt ist hierbei jedoch, wenn die Umsetzung in Schritt b) bei Temperaturen im Bereich von $\geq$ 40 °C bis $\leq$ 260 °C, vorzugsweise im Bereich von $\geq$ 60 °C bis $\leq$ 250 °C, bevorzugter im Bereich von $\geq$ 100 °C bis $\leq$ 240 °C, besonders bevorzugt im Bereich von $\geq$ 120 °C bis $\leq$ 220 °C durchgeführt wird. Dabei wird toleriert, dass die OH-funktionellen Prepolymere bei der Umsetzung kurzfristige (< 60 Sekunden) Abweichungen der Reaktionstemperatur von den oben genannten Bereichen erfährt.

Neigen die OH-funktionellen Prepolymere zur Kristallisation und besitzen einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes der OH-funktionellen Prepolymere durchgeführt.

In einer bevorzugten Ausführungsform des erfindungsgemäßen Verfahrens weisen die OH-funktionellen Prepolymere eine aus den Funktionalitäten der Edukte berechnete mittlere OH-Funktionalität im Bereich von 1,8 bis 2,1, bevorzugt im Bereich von 1,95 bis 2,05, besonders bevorzugt im Bereich von 1,97 bis 2,0, ganz besonders bevorzugt im Bereich von 1,975 bis 2,0 auf jeweils bezogen auf die Stoffmenge der gesamten Prepolymer-Mischung.

In einer bevorzugten Ausführungsform folgt in Verfahrensschritt b) auf den ersten Statikmischer (6) mindestens ein weiterer Statikmischer (17), wobei der mindestens eine weitere Statikmischer (17) mindestens einen Wärmeübertrager aufweist. In dem mindestens einen weiteren Statikmischer (17) reagieren zumindest gegebenenfalls vorhandene Monomere des Polyisocyanatstroms (A) und des Diolstrom (B) zu OH-funktionellen Prepolymeren weiter, die nicht im mindestens ersten Statikmischer zu den OH-funktionellen Prepolymeren reagiert sind.

Die Statikmischer weisen jeweils mindestens einen Zulauf, einen Ablauf, eine Mischvorrichtung und mindestens einen Wärmeübertrager auf. Wenn mehrere Statikmischer in Schritt b) verwendet werden können diese Statikmischer als Mehrkanalreaktoren vorliegen, beispielsweise als ein Bündel von Statikmischern. In jeden Statikmischer werden die Komponenten ($\alpha$), ($\beta$) und/oder gegebenenfalls ($\gamma$) durch einen Zulauf oder mehrere Zuläufe zugeführt. Die mehreren in Reihe geschalteten Statikmischer können direkt miteinander verbunden sein, d.h. der erste Statikmischer schließt sich direkt an den darauffolgenden Statikmischer an oder sie sind durch eine Transferzone miteinander verbunden. Diese Transferzone kann beispielsweise aus einem Rohr oder einer Rohrleitung bestehen welche mindestens einen Ablauf des vorherigen Statikmischers mit mindestens einem Zulauf des drauffolgenden Statikmischers verbindet. Die Transferzone kann ein Mischvorrichtung aufweisen, die über die ganze Länge der Transferzone verläuft oder nur abschnittsweise. Die Transferzone kann auch einen Wärmeübertrager aufweisen, um beispielsweise die Viskosität der Reaktionsmischung in einem gewünschten Bereich zu halten.

In einer bevorzugten Ausführungsform führt der mindestens eine Wärmeübertrager kontinuierlich Wärme ab. In einer weiteren bevorzugten Ausführungsform werden in Schritt b) ein oder mehrere gekühlte und in Reihe geschaltete Statikmischer verwendet.

In einer bevorzugten Ausführungsform des erfindungsgemäßen Verfahrens liegt die Viskosität des Massestroms in Schritt b) innerhalb eines Bereichs von 0,01 Pa*s bis 10 Pa*s, bevorzugt innerhalb eines Bereichs von 0,05 Pa*s bis 5 Pa*s, besonders bevorzugt innerhalb eines Bereichs von 0,07 Pa*s bis 1 Pa*s bei einer Messtemperatur von 190 °C und einer Frequenz von 10 Hz bestimmt gemäß ISO 6721-10:2015. Die niedrige Viskosität des Massestroms in Schritt b) hat den Vorteil, dass die verwendeten Wärmeübertrager effizient arbeiten können und Wärmeübertrager mit geringer Baugröße bzw. Oberfläche verwendet werden können. Weiterhin entsteht in den bevorzugt verwendeten durchströmten Wärmeübertragern ein geringer Druckverlust, im Vergleich zu dem, der bei der Verarbeitung von höher viskosen Prepolymeren auftritt.

In einer bevorzugten Ausführungsform wird der Massestrom aus dem mindestens ersten Statikmischer (6) vor dem Einleiten in den mindestens einen weiteren Statikmischer (16) mit einem weiteren Polyisocyanatzuführungsstrom (E1) in einer weiteren Mischungseinrichtung (17) gemischt, sodass ein zweiter Mischungsstrom (C1) erhalten wird, wobei der Polyisocyanatzuführungsstrom (E1) die Komponente ($\alpha$) und gegebenenfalls die Komponente ($\gamma$) enthält.

In einer bevorzugten Ausführungsform wird der Massestrom aus dem jeweils vorherigen Statikmischer jedes Mal vor dem Eintritt in einen darauffolgenden Statikmischer mit einem weiteren Polyisocyanatzuführungsstrom (En) in einer weiteren Mischungseinrichtung gemischt, sodass ein weiterer Mischungsstrom (Cn) erhalten wird, wobei jeder weitere Polyisocyanatzuführungsstrom (En) die Komponente ($\alpha$) und gegebenenfalls die Komponente ($\gamma$) enthält und wobei jeder Statikmischer vorzugsweise mindestens einen Wärmeübertrager aufweist.

In einer bevorzugten Ausführungsform sind in Verfahrensschritt b) alle Statikmischer in Reihe geschaltet.

In einer bevorzugten Ausführungsform erstrecken sich der mindestens eine Wärmeübertrager oder die Gesamtheit aller Wärmeübertrager eines Statikmischers, sich jeweils über die gesamte Länge des Statikmischers.

Die Statikmischer weisen in einer bevorzugten Ausführungsform des erfindungsgemäßen Verfahrens einen oder mehrere Abschnitte auf, die jeweils unabhängig voneinander temperiert sind. Die Abschnitte müssen dabei nicht räumlich getrennt sein. Ein Abschnitt kann beispielsweise der von einem Wärmeübertrager temperierte Bereich sein. Ein Statikmischer kann beispielsweise zwei Wärmeübertrager aufweisen, die jeweils zwei Abschnitte in dem Statikmischer unterschiedlich temperieren bzw. unterschiedlich viel Wärme aus den jeweiligen Abschnitten abführen. Wenn Schritt b) mit zwei in Reihe geschalteten Statikmischern durchgeführt wird, die jeweils zwei Wärmeübertrager aufweisen, würden somit vier Abschnitte vorliegen.

In einer bevorzugten Ausführungsform weist der mindestens erste Statikmischer (6) und jeder weitere Statikmischer aus Verfahrensschritt b) einen oder mehrere Abschnitte auf, die jeweils unabhängig voneinander temperiert sind. Vorzugsweise weist der erste Abschnitt des Statikmischers die niedrigste Temperatur auf, besonders bevorzugt weist der erste Abschnitt des Statikmischers die niedrigste Temperatur auf und alle darauf folgenden Abschnitte des Statikmischers jeweils eine höhere Temperatur aufweisen als der jeweils vorherige Abschnitt.

Die Reaktionsenthalpie wird mit Hilfe von Wärmeübertragern abgeführt, die diese Reaktionsenthalpie als Wärme an ein Kühlmittel abgeben. Dieses Kühlmittel kann beispielsweise Wasser im flüssigen Zustand, Wasser im Siedezustand oder Wärmeträgeröl, wie beispielsweise Marlotherm SH (Fa. Sasol) oder Diphyl (Fa. Lanxess), in flüssigem Zustand sein.

Das Kühlmittel hat bevorzugt beim Eintritt in den Wärmeübertrager eine Temperatur, die oberhalb der Kristallisationstemperatur der Reaktionsmischung bei Verfahrensbedingungen liegt, um Verstopfungen zu vermeiden.

Die Wärmeübertrager können in verschiedener Art ausgeführt sein. Beispielsweise kann es sich um Rohrbündel-Wärmeübertrager mit Leerrohren oder Rohrbündel-Wärmeübertrager mit Einbauten zur Verbesserung des Wärmeübergangs (z.B. Statikmischer wie vom Typ Kenics, SMX von Sulzer oder SMXL von Sulzer) handeln, oder beispielsweise kann es sich um Platten-Wärmeübertrager handeln, oder beispielsweise kann es sich um temperierbare statische Mischer handeln, die beispielsweise vom Typ SMR (Fa. Sulzer) oder CSE-XR (Fa. Fluitec) sein können.

In einer bevorzugten Ausführungsform des erfindungsgemäßen Verfahrens weisen die ein oder mehreren Rohrreaktoren jeweils unabhängig voneinander mindestens einen Doppelmantel oder innenliegende Wärmeübertragerrohre oder mindestens einen Doppelmantel und innenliegende Wärmeübertragerrohre auf. Beispiele hierfür sind Reaktoren vom Typ SMXL (Fa. Sulzer) oder Mischer-Wärmetauscher des Typs CSE-XR (Fa. Fluitec).

In einer bevorzugten Ausführungsform beträgt bzw. liegt die durch den mindestens einen Wärmeübertrager oder die Gesamtheit der Wärmeübertrager abgeführte Wärme je Statikmischer im Bereich von 10 % bis 90 %, vorzugsweise im Bereich von 20 % bis 90 %, besonders bevorzugt im Bereich von 25 % bis 85 % der in dem jeweiligen Statikmischer freigesetzten gesamten Reaktionsenthalpie.

Unter "gesamter Reaktionsenthalpie" im Rahmen der vorliegenden Erfindung wird die massenspezifische Änderung der Enthalpie verstanden, die bei der Polymerisationsreaktion (Polyaddition) der Komponente ($\alpha$) mit Komponente ($\beta$) frei wird. Die Reaktionsenthalpie wird dabei in kJ je kg der Gesamtreaktionsmischung von Komponente ($\alpha$) und Komponente ($\beta$), bei einem molaren Verhältnis von Komponente ($\alpha$) zu Komponente ($\beta$) von 1,0 : 1,0 angegeben. Eine Reaktion mit einer negativen Reaktionsenthalpie wird als eine exotherme Reaktion beschrieben, das heißt, dass bei der Reaktion Energie in Form von Wärme freigesetzt wird.

In einer bevorzugten Ausführungsform weist der erste Mischungsstrom C vor Eintritt in den mindestens ersten Statikmischer 6 eine mittlere kalorische Temperatur im Bereich von 0 °C bis 80 °C auf, vorzugsweise eine mittlere kalorische Temperatur im Bereich von 10 °C bis 60 °C auf, besonders bevorzugt eine mittlere kalorische Temperatur im Bereich von 20 °C bis 50 °C auf.

Die mittlere kalorische Temperatur $T_{mix}$ wird folgendermaßen bestimmt: $h_i(T)$ ist die spezifische Enthalpie der Komponente $i$ ($i$ kann dabei für ($\alpha$), ($\beta$) oder ($\gamma$) stehen) in Kilojoule pro Kilogramm als Funktion der Temperatur $T$, wobei alle spezifischen Enthalpien die gleichen Bezugstemperaturen aufweisen, $\dot{m}_i$ ist der Massendurchsatz der Komponente i in Kilogramm pro Sekunde (der, wenn eine Komponente nicht zugegeben wird, auch gleich Null sein kann) und $T_{ein,i}$ die Eintrittstemperatur der Komponente i. Die mittlere kalorische Temperatur $T_{mix}$ erfüllt dann die Bedingung (Literatur: Seite "Richmannsche Mischungsregel". In: Wikipedia, Die freie Enzyklopädie. Bearbeitungsstand: 25. September 2018, 2:05 UTC. URL: https://de.wikipedia.org/w/index.php?title=Richmannsche_ Mischungsregel&oldid=181216395 (Abgerufen: 25. September 2018, 13:36 UTC))

$$\sum_i \dot{m}_i h_i(T_{ein,i}) = \sum_i \dot{m}_i h_i(T_{mix})$$

$$m_1 \cdot \left(h_1(T_1) - h_1(T_{mix})\right) = m_2 \cdot (h_2(T_2) - h_2(T_{mix}))$$

Wenn die spezifischen Wärmekapazitäten ($c_n$) als konstant angenommen werden, kann die Gleichung zur folgenden Gleichung umgeformt werden:

$$m_1 \cdot c_1 \cdot \left(h_1(T_1) - h_1(T_{mix})\right) = m_2 \cdot c_1 \cdot (h_2(T_2) - h_2(T_{mix}))$$

Daraus ergibt sich Gleichung 1:

$$T_{mix} = \frac{m_1 \cdot c_1 \cdot T_1 + m_2 \cdot c_2 \cdot T_2}{m_1 \cdot c_1 + m_2 \cdot c_2}$$

Für den Fall nicht konstanter Wärmekapazitäten muss mit gemittelten Wärmekapazitäten gerechnet werden.

In einer bevorzugten Ausführungsform weist der zweite Mischungsstrom (C1) vor Eintritt in den mindestens einen weiteren Statikmischer (16) eine mittlere kalorische Temperatur im Bereich von 70 °C bis 240 °C, vorzugsweise im Bereich von 90 °C bis 220 °C, besonders bevorzugter im Bereich 110 °C bis 200 °C auf.

In Schritt c) wird der Massestrom aus Verfahrensschritt b) als Prepolymerstrom D in einen Extruder eingeleitet.

Der Prepolymerstrom (D) enthält also eine Mischung aus Monomeren des Polyisocyanatstroms (A) und des Diolstroms (B) sowie aus oligomeren Reaktionsprodukten und aus dem Prepolymer. Während des Durchlaufens des mindestens einen Statikmischers oder der Statikmischer in Schritt b) reagieren die Monomere sowohl miteinander als auch mit den gebildeten oligomeren Reaktionsprodukten dieser Monomere. In Schritt b) findet folglich eine kontinuierliche Reaktion unter Erhalt des OH-funktionellen Prepolymers statt. Der durchschnittliche Polymerisationsgrad n der OH-funktionellen Prepolymere liegt in einem Bereich von 1,5 bis 19, bevorzugt im Bereich von 2 bis 9 und besonders bevorzugt im Bereich von 3,2 bis 6, wobei der durchschnittliche Polymerisationsgrad $n = \frac{x}{1-x}$ ist und wobei $x$ das Verhältnis der NCO-Gruppen der eingesetzten Polyisocyanatmonomere zu den Hydroxy-Gruppen der eingesetzten Diolmonomere ist.

Bevorzugt wird der Prepolymerstrom (D) in Schritt c) einlassseitig des Extruders in den Extruder (10) eingeleitet. Bevorzugt werden vor dem Einleiten des Prepolymerstroms (D) in den Extruder (10) aus dem Prepolymerstrom Gase und gasförmige Nebenprodukte entfernt. In einer Ausführungsform werden Gase und gasförmige Nebenprodukte entfernt, indem der Prepolymerstrom (D) durch eine Entlüftungseinrichtung (9) mit einem Unterdruck von 0,1 mbar bis 10 mbar unter Normaldruck geführt wird, wobei die Entlüftungseinrichtung (9) vorzugsweise an dem Extruder (10) angeordnet ist. Bevorzugt erfolgt die Entfernung von Gasen und gasförmigen Nebenprodukten durch eine atmosphärische Entgasung, d.h. durch eine Entlüftungseinrichtung, die an dem Extruder (10) angeordnet ist, ohne Anlegung eines Unterdrucks.

In Schritt d) wird ein Polyisocyanatzuführungsstrom (E) in den Extruder (10) in Extruderarbeitsrichtung stromabwärts der Einleitung des Prepolymerstroms (D) eingeleitet, wobei die Einleitung in der Weise erfolgt, dass die im Prepolymerstrom (D) enthaltenen OH-funktionellen Prepolymere und das im Polyisocyanatzuführungsstrom (E) enthaltene Polyisocyanat in einem Isocyanat-Index von 85 bis 120 zueinander stehen. Der Polyisocyanatzuführungsstrom (E) enthält oder besteht aus einem oder mehreren Polyisocyanate der Komponente ($\alpha$). Bevorzugt enthalten oder bestehen der Polyisocyanatstrom (A) und/oder der Polyisocyanatzuführungsstrom (E) aus 1,6-Hexamethylendiisocyanat. Insbesondere enthalten oder bestehen der Polyisocyanatstrom (A) und der Polyisocyanatzuführungsstrom (E) aus 1,6-Hexamethylendiisocyanat. Bevorzugt enthalten oder bestehen der Polyisocyanatstrom (A) und der Polyisocyanatzuführ-

rungsstrom (E) aus 1,6-Hexamethylendiisocyanat und der Diolstrom (B) enthält oder besteht aus 1,4-Butandiol.

In Schritt e) wird der Prepolymerstrom (D) mit dem Polyisocyanatzuführungsstrom (E) in dem Extruder (10) umgesetzt unter Erhalt des thermoplastischen Polyurethans (F) als Extrudat. In dem Extruder (10) werden die beiden Komponenten durch die Bewegungen der Förderelemente im Inneren des Extruders sowohl durchmischt als auch in Extruderarbeitsrichtung stromabwärts in Richtung einer Auslassöffnung des Extruders befördert. Dabei reagieren die Komponenten miteinander in einem kontinuierlichen Prozess, so dass das thermoplastische Polyurethan erhalten wird. Bevorzugt nimmt die Viskosität der im Extruder (10) befindlichen Komponenten in Extruderarbeitsrichtung mit fortschreitendem Polymerisationsgrad zu. Im Bereich der Einlassöffnungen für den Prepolymerstrom (D) und den Polyisocyanatzuführungsstrom (E) liegt im Extruder (10) bevorzugt eine Mischung mit einer niedrigen Viskosität vor, die als Flüssigkeit bezeichnet werden kann, während kurz vor Austritt aus dem Extruder vorzugsweise eine Polymerschmelze vorliegt, welche eine höhere Viskosität aufweist, als der Prepolymerstrom und der Isocyanatzuführungsstrom und als zähflüssig bezeichnet werden kann. Bei dem Extruder (10) handelt es sich bevorzugt um einen gleichläufigen Doppelschneckenextruder. Bevorzugt wird die Umsetzung in Schritt e) bei einer Temperatur im Bereich von 150 °C bis 280 °C, vorzugsweise im Bereich 180 °C bis 260 °C, besonders bevorzugt im Bereich von 190 °C bis 250 °C durchgeführt wird.

Vorzugsweise betragen die Temperaturen der Gehäuse des Extruders (10), die direkt mit der Polymerschmelze in Berührung stehen, im Verfahrensschritt e) größer oder gleich 150 °C und kleiner oder gleich 280 °C, vorzugsweise größer oder gleich 180 °C und kleiner oder gleich 260 °C und besonders bevorzugt größer oder gleich 190 °C und kleiner oder gleich 250 °C. In diesem Temperaturbereich ist die Reproduzierbarkeit besonders hoch und die thermische Belastung besonders gering, so dass auch wenige Nebenreaktionen auftreten.

In einer bevorzugten Ausführungsform werden aus dem thermoplastischen Polyurethan (F) Gase und gasförmige Nebenprodukte entfernt, indem ein Unterdruck von 50 mbar bis 800 mbar, bevorzugter von 80 mbar bis 600 mbar, noch bevorzugter von 100 mbar bis 500 mbar, jeweils unter Normaldruck, an einem Entgasungsschacht (11) angelegt wird, der bevorzugt im in Extruderarbeitsrichtung letzten Drittel des Extruders (10) angeordnet ist. Dazu wird bevorzugt ein Entgasungsdom auf dem Entgasungsschacht angeordnet.

In einer bevorzugten Ausführungsform des erfindungsgemäßen Verfahrens wird in dem Entgasungsschacht (11) ein Entgasungsextruder angeordnet, auf dem sich ein Vakuumdom befindet und ein Unterdruck von 50 mbar bis 800 mbar unter Normaldruck angelegt wird. Bei dem Entgasungsextruder handelt es sich bevorzugt um einen Schneckenextruder, bei dem die Laufrichtung der Schnecken so eingestellt ist, dass sie Polymerschmelze oder thermoplastisches Polyurethan, welches durch den Unterdruck aus dem Extruder in den Entgasungsschacht gezogen wird, wieder in den Extruder befördert.

In einer weiteren Ausführungsform wird in dem Entgasungsschacht (11) des Extruders (10) eine Rückhalteeinrichtung angeordnet, auf der sich ein Vakuumdom befindet und ein Unterdruck von 80 mbar bis 600 mbar, bevorzugter von 100 mbar bis 500 mbar, jeweils unter Normaldruck angelegt. Bei dieser Ausführungsform wird ein Doppelschneckenextruder zur Durchführung des Verfahrens verwendet und die Öffnung des Entgasungsschachtes zum Extruder weist eine längliche Form auf und ist senkrecht zur Achse der Doppelschnecken ausgebildet, so dass durch die Öffnung ein Teil beider Doppelschnecken überdeckt wird. Die Rückhalteeinrichtung ist bevorzugt so ausgestaltet, dass ihre zum Extruder orientierte Öffnung den Bereich der aufdrehenden Schnecke und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke weg in Richtung des Vakuumdoms. So prallt Polymerschmelze oder thermoplastisches Polyurethan, welches in die Rückhalteeinrichtung gezogen wird, an dem schrägen Schacht ab und fällt wieder zurück in den Extruder und wird durch die Drehbewegung der Schnecken im Extruder wieder in den Extruder gezogen. Als Zwickel wird dabei der Eingreifbereich der beiden Schnecken bezeichnet. In Doppelschneckenextrudern berühren sich die beiden Schneckenelemente nicht, sind aber so ausgestaltet, dass sie ineinandergreifen. Der Eingreifbereich der beiden Schnecken wird Zwickel genannt. Als aufdrehende Schnecke wird die Schnecke bezeichnet, deren Rotationsbewegung von dem Gehäuse des Extruders weg zu dem Bereich zwischen den beiden Achsen der Schneckenelemente gerichtet ist.

Unter Normaldruck wird im Sinne der Erfindung ein Druck von 101325 Pa = 1,01325 bar verstanden.

Bevorzugt umfasst das Verfahren die folgenden, zusätzlichen Schritte:

f) Abkühlen des thermoplastischen Polyurethans (F) auf eine Temperatur unter seinen Schmelzpunkt in einer Kühlungseinrichtung (12), wobei es sich bei der Kühlungseinrichtung (12) bevorzugt um ein Wasserbad handelt,
g) Zerkleinerung des thermoplastischen Polyurethans (F) in einer Zerkleinerungseinrichtung (13).

Dabei wird durch das Abkühlen des thermoplastischen Polyurethans (F) ein Feststoff erhalten, der in der Zerkleinerungseinrichtung (13) bevorzugt zu einem Granulat zerkleinert wird. Dieses Granulat kann in einem Extrusionsverfahren zur Weiterverarbeitung aufgeschmolzen und die durch das Aufschmelzen erhaltene Polymerschmelze zu einem Formteil verarbeitet werden, zum Beispiel durch Einspritzen in eine Form.

Eine weitere Ausführungsform die Erfindung betrifft ein thermoplastisches Polyurethan erhältlich oder erhalten durch das erfindungsgemäße Verfahren.

In einer weiteren Ausführungsform betrifft die Erfindung die Verwendung eines thermoplastischen Polyurethans in einem Formgebungsverfahren unter Aufschmelzen des thermoplastischen Polyurethans, insbesondere zur Herstellung von Innenraumbauteilen von Fahrzeugen.

Eine weitere Ausführungsform der Erfindung betrifft eine Vorrichtung zur Durchführung des erfindungsgemäßen Verfahrens umfassend:

einen Polyisocyanat-Vorratsbehälter (1), von dem eine Polyisocyanatleitung (21) zur Förderung eines Polyisocyanatstroms (A) abgeht, die in eine erste Mischungseinrichtung (5) mündet;

einen Polyol-Vorratsbehälter (2), von dem eine Polyolleitung (24) zur Förderung eines Diolstroms (B) abgeht, die in die erste Mischungseinrichtung (5) mündet, wobei die Polyolleitung (24) insbesondere stromaufwärts der ersten Mischungseinrichtung (5) mit der Polyisocyanatleitung (21) zusammengeführt wird;

eine Zuführungsleitung (23) zur Förderung eines aus der ersten Mischungseinrichtung (5) austretenden ersten Mischungsstroms (C), die in den mindestens einen ersten Statikmischer (6), zur chemischen Umsetzung der Komponenten des ersten Mischungsstroms (C), mündet;

eine von dem mindestens einen Statikmischer (6) abgehende Leitung (25) zur Förderung des Massestroms aus dem mindestens einen Statikmischer (6);

gegebenenfalls ein weiterer Polyisocyanat-Vorratsbehälter (18), von dem eine weitere Polyisocyanatzuführungsleitung (20) zur Förderung des einen weiteren Polyisocyanatzuführungsstroms (E1) abgeht,

gegebenenfalls eine weitere Mischungseinrichtung (16), in welche die Leitung (27) und die weitere Polyisocyanatzuführungsleitung (20) münden;

gegebenenfalls eine Zuführungsleitung (28) zur Förderung eines aus der weiteren Mischungseinrichtung (16) austretenden zweiten Mischungsstroms (C1), die in den mindestens einen weiteren Statikmischer (17), zur chemischen Umsetzung der Komponenten des zweiten Mischungsstroms (C1), mündet;

eine von dem einen weiteren Statikmischer (17) abgehende Prepolymerzuführungsleitung (30) zur Förderung des Prepolymerstroms (D), aus dem einen weiteren Statikmischer (17), die einlassseitig in einen Extruder (10) mündet;

ein in der Prepolymerzuführungsleitung (25) vorgesehenes Druckregelventil (7) zur Regulierung des Drucks des Prepolymerstroms (D);

ein in der Prepolymerzuführungsleitung (25) angeordnetes und insbesondere stromabwärts des Druckregelventils (7) positioniertes Dreiwegeventil (29), von dem eine in einen Abfallbehälter (8) mündende Abfallleitung (26) abgeht, über die der Prepolymerstrom (D) insbesondere bei Inbetriebnahme, Außerbetriebnahme oder Störung der Vorrichtung ganz oder teilweise in den Abfallbehälter (8) geführt werden kann;

eine vorzugsweise an der Einmündung der Prepolymerzuführungsleitung (25) in den Extruder (10) angeordnete Entlüftungseinrichtung (9) zur Entfernung von Gasen und gasförmigen Nebenprodukten aus dem Prepolymerstrom (D);

eine vom Polyisocyanat-Vorratsbehälter (1) oder der Polyisocyanatleitung (21) abgehende und in Extruderarbeitsrichtung vorzugsweise stromabwärts der Prepolymerzuführungsleitung (25) in den Extruder (10) mündende Polyisocyanatzuführungsleitung (15) zur Förderung eines Polyisocyanatzuführungsstroms (E);

wobei der Extruder (10) zur Umsetzung der Komponenten des Prepolymerstroms (D) mit den Komponenten des Polyisocyanatzuführungsstroms (E) zu einem thermoplastischen Polyurethan (F) geeignet ist und dem Extruder 10 ein Entgasungsschacht (11) zur Entfernung von Gasen und gasförmigen Nebenprodukten mittels Unterdruck aus dieser Umsetzung zugeordnet ist, wobei der Entgasungsschacht (11) bevorzugt im in Extruderarbeitsrichtung letzten Drittel des Extruders (10) angeordnet ist;

gegebenenfalls eine hinter dem Auslass des Extruders (10) angeordnete Kühlungseinrichtung (12), vorzugsweise ein Wasserbad, zur Abkühlung des thermoplastischen Polyurethans (F) unter seinen Schmelzpunkt;

gegebenenfalls eine sich an die Kühlungseinrichtung (12) anschließende Zerkleinerungseinrichtung (13) zur Zerkleinerung des abgekühlten thermoplastischen Polyurethans (F).

In einer bevorzugten Ausführungsform der Vorrichtung, mündet die Polyolleitung (24) in die erste Mischungseinrichtung (5), d.h. sie mündet nicht stromaufwärts der ersten Mischungseinrichtung (5) in die Polyisocyanatleitung (21).

Bevorzugt wird als erste Fördereinrichtung (3), als zweite Fördereinrichtung (4), als dritte Fördereinrichtung (14) und/oder als vierte Fördereinrichtung (19) unabhängig voneinander eine Zahnringpumpe eingesetzt.

Bevorzugt wird als erste und/oder weitere Mischungseinrichtung (5, 16) unabhängig voneinander ein Statikmischer eingesetzt.

Bevorzugte weisen der erste Statikmischer (6) und der mindestens eine weitere Statikmischer (16) jeweils unabhängig voneinander einen Wärmeübertrager auf, wobei der Wärmeübertrager vorzugsweise ein Doppelmantel oder innenliegende Wärmeübertragerrohre oder ein Doppelmantel und innenliegende Wärmeübertragerrohre ist, die mit einem Temperiermittel beheizbar sind, wobei das Temperiermittel bevorzugt für einen Temperaturbereich von 160 °C bis 220 °C geeignet ist.

In einer bevorzugten Ausführungsform umfasst die Vorrichtung einen Entgasungsdom, der auf dem Entgasungsschacht (11) angeordnet ist und zum Anlegen eines Unterdrucks von 50 mbar bis 800 mbar, bevorzugter von 80 mbar bis 600 mbar, noch bevorzugter von 100 mbar bis 500 mbar, jeweils unter Normaldruck, geeignet ist.

In einer bevorzugten Ausführungsform umfasst die Vorrichtung einen Entgasungsextruder, der in dem Entgasungsschacht angeordnet ist und auf dem sich ein Vakuumdom befindet. Der Entgasungsextruder und der Vakuumdom sind für das Anlegen einen Unterdrucks von 100 mbar bis 500 mbar unter Normaldruck geeignet. Bei dem Entgasungsextruder handelt es sich bevorzugt um einen Schneckenextruder, bei dem die Laufrichtung der Schnecken so eingestellt ist, dass sie Polymerschmelze oder thermoplastisches Polyurethan, welches durch den Unterdruck aus dem Extruder in den Entgasungsschacht gezogen wird, wieder in den Extruder befördert. Bevorzugt wird der Entgasungsextruder so in dem Entgasungsschacht angeordnet, dass die Schnecken des Entgasungsextruders nur einen Abstand von 0,5 cm bis 5 cm, bevorzugt 0,8 cm bis 2,5 cm, bevorzugter 1 cm bis 2 cm, jeweils zu den Schnecken des Extruders, in dem die Polymerisation stattfindet, haben.

In einer weiteren Ausführungsform umfasst die Vorrichtung eine Rückhalteeinrichtung, die in dem Entgasungsschacht des Extruders angeordnet ist und auf der sich ein Vakuumdom befindet. Die Rückhalteeinrichtung und der Vakuumdom sind für das Anlegen eines Unterdrucks von 80 mbar bis 600 mbar, bevorzugter von 100 mbar bis 500 mbar, jeweils unter Normaldruck geeignet. Bei dieser Ausführungsform ist der Extruder ein Doppelschneckenextruder und die Öffnung des Entgasungsschachtes zum Extruder weist eine längliche Form auf und ist senkrecht zur Achse der Doppelschnecken ausgebildet, so dass durch die Öffnung ein Teil beider Doppelschnecken überdeckt wird. Die Rückhalteeinrichtung ist bevorzugt so ausgestaltet, dass ihre zum Extruder orientierte Öffnung den Bereich der aufdrehenden Schnecke und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke weg in Richtung des Vakuumdoms. So prallt Polymerschmelze oder thermoplastisches Polyurethan, welches in die Rückhalteeinrichtung gezogen wird, an dem schrägen Schacht ab und fällt wieder zurück in den Extruder und wird durch die Drehbewegung der Schnecken im Extruder wieder in den Extruder gezogen.

Bevorzugt ist der Extruder (10) ein Planetwalzenextruder oder ein Schneckenextruder, wobei der Extruder bevorzugter ein gleichläufiger Doppelschneckenextruder ist.

Die Erfindung betrifft insbesondere die folgenden Ausführungsformen:

In einer ersten Ausführungsform betrifft die Erfindung ein Verfahren zur kontinuierlichen lösungsmittelfreien Herstellung eines thermoplastischen Polyurethans (F) durch Umsetzung der Komponenten

(α) einem oder mehreren cycloaliphatischen, aliphatischen und/oder araliphatischen Polyisocyanaten,
(β) einem oder mehreren cycloaliphatischen, aliphatischen und/oder araliphatischen Diolen, wobei die Gesamtmenge der Komponente (β) eine Hydroxylzahl im Bereich von 600 mg KOH/g bis 1830 mg KOH/g bestimmt gemäß DIN EN ISO 4629-2:2016 aufweist,
(γ) gegebenenfalls in Gegenwart von einem oder mehreren Katalysatoren, und/oder einem oder mehreren Zusatzstoffen,
umfassend die folgenden Schritte:

a) Mischen eines Polyisocyanatstroms (A) und eines Diolstroms (B) in einer ersten Mischungseinrichtung (5), so dass ein erster Mischungsstrom (C) erhalten wird, wobei die Massenströme des Polyisocyanatstroms (A) und des Diolstroms (B) so eingestellt werden, dass der Isocyanat-Index im Mischungsstrom (C) im Bereich von 55 bis 85 liegt,
b) Einleiten des ersten Mischungsstroms (C) in mindestens einen ersten Statikmischer (6) der mindestens einen Wärmeübertrager aufweist, wobei die Monomere des Polyisocyanatstroms (A) und des Diolstroms (B) in dem mindestens ersten Statikmischer (6) zumindest teilweise zu OH-funktionellen Prepolymeren weiterreagieren,
c) Einleiten des Massestroms aus Verfahrensschritt b) als Prepolymerstrom (D) in einen Extruder (10),
d) Einleiten eines Polyisocyanatzuführungsstroms (E) in den Extruder (10) in Extruderarbeitsrichtung stromabwärts der Einleitung des Prepolymerstroms (D), wobei die Einleitung in der Weise erfolgt, dass die im Prepolymerstrom (D) enthaltenen OH-funktionellen Prepolymere und das im Polyisocyanatzuführungsstrom (E) enthaltene Polyisocyanat in einem Isocyanat-Index im Bereich von 85 bis 120 zueinander stehen,
e) Umsetzen des Prepolymerstroms (D) mit dem Polyisocyanatzuführungsstrom (E) in dem Extruder (10) unter Erhalt des thermoplastischen Polyurethans (F) als Extrudat,

wobei der Isocyanatstrom (A) und der Polyisocyanatzuführungsstroms (E) jeweils unabhängig voneinander die Komponente (α) und gegebenenfalls die Komponente (γ) enthalten und wobei der Diolstroms (B) die Komponente (β) und gegebenenfalls die Komponente (γ) enthält.

In einer zweiten Ausführungsform betrifft die Erfindung ein Verfahren nach Ausführungsform 1, wobei in Verfahrensschritt b) auf den ersten Statikmischer (6) mindestens ein weiterer Statikmischer (17) folgt, wobei der mindestens eine weitere Statikmischer (17) mindestens einen Wärmeübertrager aufweist.

In einer dritten Ausführungsform betrifft die Erfindung ein Verfahren nach Ausführungsform 1 oder 2, wobei die Komponenten (α) und (β) ohne einen Katalysator miteinander umgesetzt werden.

In einer vierten Ausführungsform betrifft die Erfindung ein Verfahren gemäß einer der Ausführungsformen 1 bis 3, wobei der Diolstrom (B) mit dem Polyisocyanatstrom (A) bereits stromaufwärts der ersten Mischungseinrichtung (5) zusammengeführt wird.

In einer fünften Ausführungsform betrifft die Erfindung ein Verfahren gemäß einer der Ausführungsformen 1 bis 4, wobei der Diolstrom (B) und der Polyisocyanatstrom (A) unabhängig voneinander in die erste Mischungseinrichtung (5) geführt werden.

In einer sechsten Ausführungsform betrifft die Erfindung ein Verfahren gemäß einer der Ausführungsformen 1 bis 5, wobei die Temperaturen in Schritt b) Temperaturen im Bereich von ≥ 40 °C bis ≤ 260 °C, vorzugsweise im Bereich von ≥ 60 °C bis ≤ 250 °C, bevorzugter im Bereich von ≥ 100 °C bis ≤ 240 °C, besonders bevorzugt im Bereich von ≥ 120 °C bis ≤ 220 °C liegen.

In einer siebten Ausführungsform betrifft die Erfindung ein Verfahren gemäß einer der Ausführungsformen 1 bis 6, wobei die Temperaturen in Schritt b) in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes der OH-funktionellen Prepolymere liegen.

In einer achten Ausführungsform betrifft die Erfindung ein Verfahren gemäß einer der Ausführungsformen 1 bis 7, wobei die OH-funktionellen Prepolymere eine aus den Funktionalitäten der Edukte berechnete mittlere OH-Funktionalität im Bereich von 1,8 bis 2,1, bevorzugt im Bereich von 1,95 bis 2,05, besonders bevorzugt im Bereich von 1,97 bis 2,0, ganz besonders bevorzugt im Bereich von 1,975 bis 2,0 aufweisen, jeweils bezogen auf die Stoffmenge der gesamten Prepolymer-Mischung.

In einer neunten Ausführungsform betrifft die Erfindung ein Verfahren gemäß einer der Ausführungsformen 1 bis 8, wobei der Polyisocyanatstrom (A) eine Temperatur von 20 °C bis 25 °C und unabhängig hiervon der Diolstrom (B) eine Temperatur von 35 °C bis 45 °C aufweist.

In einer zehnten Ausführungsform betrifft die Erfindung ein Verfahren gemäß einer der Ausführungsformen 1 bis 9, wobei der mindestens eine Wärmeübertrager kontinuierlich Wärme abführt.

In einer elften Ausführungsform betrifft die Erfindung ein Verfahren gemäß einer der Ausführungsformen 1 bis 10, wobei in Schritt b) ein oder mehrere gekühlte und in Reihe geschaltete Statikmischer verwendet werden.

In einer zwölften Ausführungsform betrifft die Erfindung ein Verfahren gemäß einer der Ausführungsformen 1 bis 11, wobei die Viskosität des Massestroms in Schritt b) innerhalb eines Bereichs von 0,01 Pa*s bis 10 Pa*s, bevorzugt innerhalb eines Bereichs von 0,05 Pa*s bis 5 Pa*s, besonders bevorzugt innerhalb eines Bereichs von 0,07 Pa*s bis 1 Pa*s bei einer Messtemperatur von 190 °C und einer Frequenz von 10 Hz bestimmt gemäß ISO 6721-10:2015 liegt.

In einer dreizehnten Ausführungsform betrifft die Erfindung ein Verfahren gemäß einer der Ausführungsformen 1 bis 12, wobei der Massestrom aus dem mindestens ersten Statikmischer (6) vor dem Einleiten in den mindestens einen weiteren Statikmischer (16) mit einem weiteren Polyisocyanatzuführungsstrom (E1) in einer weiteren Mischungseinrichtung (17) gemischt wird, sodass ein zweiter Mischungsstrom (C1) erhalten wird, wobei der Polyisocyanatzuführungsstrom (E1) die Komponente (α) und gegebenenfalls die Komponente (γ) enthält.

In einer vierzehnten Ausführungsform betrifft die Erfindung ein Verfahren gemäß einer der Ausführungsformen 1 bis 13, wobei der Massestrom aus dem jeweils vorherigen Statikmischer jedes Mal vor dem Eintritt in einen darauffolgenden Statikmischer mit einem weiteren Polyisocyanatzuführungsstrom (En) in einer weiteren Mischungseinrichtung gemischt wird, sodass ein weiterer Mischungsstrom (Cn) erhalten wird, wobei jeder weitere Polyisocyanatzuführungsstrom (En) die Komponente (α) und gegebenenfalls die Komponente (γ) enthält und wobei jeder Statikmischer vorzugsweise mindestens einen Wärmeübertrager aufweist.

In einer fünfzehnten Ausführungsform betrifft die Erfindung ein Verfahren gemäß einer der Ausführungsformen 1 bis 14, wobei in Verfahrensschritt b) alle Statikmischer in Reihe geschaltet sind.

In einer sechzehnten Ausführungsform betrifft die Erfindung ein Verfahren gemäß einer der Ausführungsformen 1 bis 15, wobei sich der mindestens eine Wärmeübertrager oder die Gesamtheit aller Wärmeübertrager eines Statikmischers, sich jeweils über die gesamte Länge des Statikmischers erstrecken.

In einer siebzehnten Ausführungsform betrifft die Erfindung ein Verfahren gemäß einer der Ausführungsformen 1 bis 16, wobei der mindestens erste Statikmischer (6) und jeder weitere Statikmischer aus Verfahrensschritt b) einen oder mehrere Abschnitte aufweist, die jeweils unabhängig voneinander temperiert sind, vorzugsweise wobei der erste Abschnitt des Statikmischers die niedrigste Temperatur aufweist, besonders bevorzugt wobei der erste Abschnitt des Statikmischers die niedrigste Temperatur aufweist und alle darauf folgenden Abschnitte des Statikmischers jeweils eine höhere Temperatur aufweisen als der jeweils vorherige Abschnitt.

In einer achtzehnten Ausführungsform betrifft die Erfindung ein Verfahren gemäß einer der Ausführungsformen 1 bis 17, wobei die durch den mindestens einen Wärmeübertrager oder die Gesamtheit der Wärmeübertrager abgeführte Wärme je Statikmischer im Bereich von 10 % bis 90 %, vorzugsweise im Bereich von 20 % bis 90 %, besonders bevorzugt im Bereich von 25 % bis 85 % der in dem jeweiligen Statikmischer freigesetzten gesamten Reaktionsenthalpie beträgt.

In einer neunzehnten Ausführungsform betrifft die Erfindung ein Verfahren gemäß einer der Ausführungsformen 1 bis 18, wobei der erste Mischungsstrom (C) vor Eintritt in den mindestens ersten Statikmischer (6) eine mittlere kalorische Temperatur im Bereich von 0 °C bis 80 °C, vorzugsweise im Bereich von 10 °C bis 60 °C, besonders bevorzugt im Bereich von 20 °C bis 50 °C aufweist.

In einer zwanzigsten Ausführungsform betrifft die Erfindung ein Verfahren gemäß einer der Ausführungsformen 1 bis 19, wobei der zweite Mischungsstrom (C1) vor Eintritt in den mindestens einen weiteren Statikmischer (16) eine mittlere kalorische Temperatur im Bereich von 70 °C bis 240 °C, vorzugsweise im Bereich von 90 °C bis 220 °C, besonders bevorzugter im Bereich 110 °C bis 200 °C aufweist.

In einer einundzwanzigsten Ausführungsform betrifft die Erfindung ein Verfahren gemäß einer der Ausführungsformen 1 bis 20, wobei vor dem Einleiten des Prepolymerstroms (D) in den Extruder aus dem Prepolymerstrom (D) Gase und gasförmige Nebenprodukte entfernt werden, bevorzugt indem der Prepolymerstrom (D) durch eine Entlüftungseinrichtung (9) mit einem Unterdruck von 0,1 mbar bis 10 mbar unter Normaldruck geführt wird, wobei die Entlüftungseinrichtung (9) vorzugsweise an dem Extruder (10) funktional angeordnet ist.

In einer zweiundzwanzigsten Ausführungsform betrifft die Erfindung ein Verfahren gemäß einer der Ausführungsformen 1 bis 21, wobei die Umsetzung in Schritt e) bei einer Temperatur im Bereich von 150 °C bis 280 °C, vorzugsweise im Bereich 180 °C bis 260 °C, besonders bevorzugt im Bereich von 190 °C bis 250 °C durchgeführt wird.

In einer dreiundzwanzigsten Ausführungsform betrifft die Erfindung ein Verfahren gemäß einer der Ausführungsformen 1 bis 22, wobei die Umsetzung in Schritt e) bei einer Temperatur von 150 °C bis 280 °C, bevorzugt von 180 °C bis 260 °C durchgeführt wird.

In einer vierundzwanzigsten Ausführungsform betrifft die Erfindung ein Verfahren gemäß einer der Ausführungsformen 1 bis 23, wobei aus dem thermoplastischen Polyurethan (F) Gase und gasförmige Nebenprodukte entfernt werden, indem ein Unterdruck im Bereich von 50 mbar bis 800 mbar unter Normaldruck an einem Entgasungsschacht (11) angelegt wird, der bevorzugt in Extruderarbeitsrichtung im letzten Drittel des Extruders (10) angeordnet ist.

In einer fünfundzwanzigsten Ausführungsform betrifft die Erfindung ein Verfahren gemäß einer der Ausführungsformen 1 bis 24, wobei als Komponente ($\alpha$) ein oder mehrere aliphatische, cycloaliphatische oder araliphatische monomere Diisocyanate eingesetzt werden, vorzugsweise ein oder mehrere aliphatische und / oder cycloaliphatische monomere Diisocyanate eingesetzt werden, besonders bevorzugt ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI) und/oder Mischungen aus mindestens 2 hieraus. Noch bevorzugter werden als Komponente ($\alpha$) 1,5-Diisocyanatopentan (PDI), 1,6-Diisocyanatohexan (HDI) eingesetzt und am Bevorzugtesten wird als Komponente ($\alpha$) 1,6-Diisocyanatohexan (HDI) eingesetzt.

In einer sechsundzwanzigsten Ausführungsform betrifft die Erfindung ein Verfahren gemäß einer der Ausführungsformen 1 bis 25, wobei als Komponente ($\beta$) ein oder mehrere aliphatische oder cycloaliphatische Diole mit einer Hydroxylzahl im Bereich von 600 mg KOH/g bis 1830 mg KOH/g bestimmt gemäß DIN EN ISO 4629-2:2016, vorzugsweise Diole ausgewählt aus der Gruppe bestehend aus 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus, eingesetzt werden, besonders bevorzugt ein oder mehrere aliphatische Diole mit einer Hydroxylzahl im Bereich von 600 mg KOH/g bis 1830 mg KOH/g bestimmt gemäß DIN EN ISO 4629-2:2016 eingesetzt werden, noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, eingesetzt werden und am bevorzugtesten 1,4-Butandiol eingesetzt wird.

In einer siebenundzwanzigsten Ausführungsform betrifft die Erfindung ein Verfahren gemäß einer der Ausführungsformen 1 bis 26, wobei das Verfahren die folgenden, zusätzlichen Schritte:

f) Abkühlen des thermoplastischen Polyurethans (F) auf eine Temperatur unter seinen Schmelzpunkt in einer Kühlungseinrichtung (12), wobei es sich bei der Kühlungseinrichtung (12) bevorzugt um ein Wasserbad handelt,
g) Zerkleinerung des thermoplastischen Polyurethans (F) in einer Zerkleinerungseinrichtung (13).

In einer achtundzwanzigsten Ausführungsform betrifft die Erfindung ein thermoplastisches Polyurethan erhältlich oder erhalten durch ein Verfahren gemäß einer der Ausführungsformen 1 bis 27.

In einer neunundzwanzigsten Ausführungsform betrifft die Erfindung die Verwendung eines thermoplastischen Polyurethans gemäß Ausführungsformen 28 in einem Formgebungsverfahren unter Aufschmelzen des thermoplastischen Polyurethans, insbesondere zur Herstellung von Bauteilen von Fahrzeugen.

In einer dreißigsten Ausführungsform betrifft die Erfindung eine Vorrichtung zur Durchführung eines Verfahrens gemäß einer der Ausführungsformen 1 bis 27, umfassend:

einen Polyisocyanat-Vorratsbehälter (1), von dem eine Polyisocyanatleitung (21) zur Förderung eines Polyisocyanatstroms (A) abgeht, die in eine erste Mischungseinrichtung (5) mündet;

einen Polyol-Vorratsbehälter (2), von dem eine Polyolleitung (24) zur Förderung eines Diolstroms (B) abgeht, die in die erste Mischungseinrichtung (5) mündet, wobei die Polyolleitung (24) insbesondere stromaufwärts der ersten Mischungseinrichtung (5) mit der Polyisocyanatleitung (21) zusammengeführt wird;

eine Zuführungsleitung (23) zur Förderung eines aus der ersten Mischungseinrichtung (5) austretenden ersten Mischungsstroms (C), die in den mindestens einen ersten Statikmischer (6), zur chemischen Umsetzung der Komponenten des ersten Mischungsstroms (C), mündet;

eine von dem mindestens einen Statikmischer (6) abgehende Leitung (25) zur Förderung des Massestroms aus dem mindestens einen Statikmischer (6);

gegebenenfalls ein weiterer Polyisocyanat-Vorratsbehälter (18) von dem eine weitere Polyisocyanatzuführungsleitung (20) zur Förderung des einen weiteren Polyisocyanatzuführungsstroms (E1) abgeht,

gegebenenfalls eine weitere Mischungseinrichtung (16) in welche die Leitung (27) und die weitere Polyisocyanatzuführungsleitung (20) münden;

gegebenenfalls eine Zuführungsleitung (28) zur Förderung eines aus der weiteren Mischungseinrichtung (16) austretenden zweiten Mischungsstroms (C1), die in den mindestens einen weiteren Statikmischer (17), zur chemischen Umsetzung der Komponenten des zweiten Mischungsstroms (C1), mündet;

eine von dem einen weiteren Statikmischer (17) abgehende Prepolymerzuführungsleitung (30) zur Förderung des Prepolymerstroms (D) aus dem einen weiteren Statikmischer (17), die einlassseitig in einen Extruder (10) mündet;

ein in der Prepolymerzuführungsleitung (25) vorgesehenes Druckregelventil (7) zur Regulierung des Drucks des Prepolymerstroms (D);

ein in der Prepolymerzuführungsleitung (25) angeordnetes und insbesondere stromabwärts des Druckregelventils (7) positioniertes Dreiwegeventil (29), von dem eine in einen Abfallbehälter (8) mündende Abfallleitung (26) abgeht, über die der Prepolymerstrom (D) insbesondere bei Inbetriebnahme, Außerbetriebnahme oder Störung der Vorrichtung ganz oder teilweise in den Abfallbehälter (D) geführt werden kann;

eine vorzugsweise an der Einmündung der Prepolymerzuführungsleitung (25) in den Extruder (10) angeordnete Entlüftungseinrichtung (9) zur Entfernung von Gasen und gasförmigen Nebenprodukten aus dem Prepolymerstrom (D);

eine vom Polyisocyanat-Vorratsbehälter (1) oder der Polyisocyanatleitung (21) abgehende und in Extruderarbeitsrichtung vorzugsweise stromabwärts der Prepolymerzuführungsleitung (25) in den Extruder (10) mündende Polyisocyanatzuführungsleitung (15) zur Förderung eines Polyisocyanatzuführungsstroms (E);

wobei der Extruder (10) zur Umsetzung der Komponenten des Prepolymerstroms (D) mit den Komponenten des Polyisocyanatzuführungsstroms (E) zu einem thermoplastischen Polyurethan (F) geeignet und diesem ein Entgasungsschacht (11) zur Entfernung von Gasen und gasförmigen Nebenprodukten mittels Unterdruck aus dieser Umsetzung zugeordnet ist, wobei der Entgasungsschacht (11) bevorzugt im in Extruderarbeitsrichtung letzten Drittel des Extruders (10) angeordnet ist;

gegebenenfalls eine hinter dem Auslass des Extruders (10) angeordnete Kühlungseinrichtung (12), vorzugsweise ein Wasserbad, zur Abkühlung des thermoplastischen Polyurethans (F) unter seinen Schmelzpunkt;

gegebenenfalls eine sich an die Kühlungseinrichtung (12) anschließende Zerkleinerungseinrichtung (13) zur Zerkleinerung des abgekühlten thermoplastischen Polyurethans (F).

In einer einunddreißigsten Ausführungsform betrifft die Erfindung eine Vorrichtung nach Ausführungsform 30, wobei als erste Fördereinrichtung (3), als zweite Fördereinrichtung (4), als dritte Fördereinrichtung (14) und/oder als vierte Fördereinrichtung (19) unabhängig voneinander eine Zahnringpumpe eingesetzt wird.

In einer zweiunddreißigsten Ausführungsform betrifft die Erfindung eine Vorrichtung gemäß einer der Ausführungsformen 30 oder 31, wobei als erste und/oder weitere Mischungseinrichtung (5, 16) unabhängig voneinander ein Statikmischer eingesetzt wird.

In einer dreiunddreißigsten Ausführungsform betrifft die Erfindung eine Vorrichtung gemäß einer der Ausführungsformen 30 bis 32, wobei der erste Statikmischer (6) und der mindestens eine weitere Statikmischer (16) jeweils unabhängig voneinander einen Wärmeübertrager aufweisen, wobei der Wärmeübertrager vorzugsweise ein Doppelmantel oder innenliegende Wärmeübertragerrohre oder ein Doppelmantel und innenliegende Wärmeübertragerrohre ist, die mit einem Temperiermittel beheizbar sind, wobei das Temperiermittel bevorzugt für einen Temperaturbereich von 160 °C bis 220 °C geeignet ist.

In einer vierunddreißigsten Ausführungsform betrifft die Erfindung eine Vorrichtung gemäß einer der Ausführungsformen 30 bis 33, wobei der Extruder (10) ein Planetwalzenextruder oder ein Schneckenextruder ist, wobei der Extruder (10) bevorzugt ein gleichläufiger Doppelschneckenextruder ist.

In einer fünfunddreißigsten Ausführungsform betrifft die Erfindung eine Vorrichtung gemäß einer der Ausführungsformen 30 bis 34, wobei die Vorrichtung einen Entgasungsdom, der auf dem Entgasungsschacht (11) angeordnet ist umfasst und zum Anlegen eines Unterdrucks von 50 mbar bis 800 mbar, bevorzugter von 80 mbar bis 600 mbar, noch bevorzugter von 100 mbar bis 500 mbar, jeweils unter Normaldruck, geeignet ist.

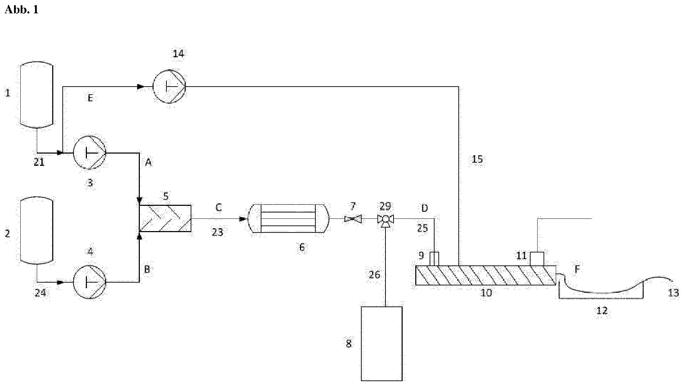

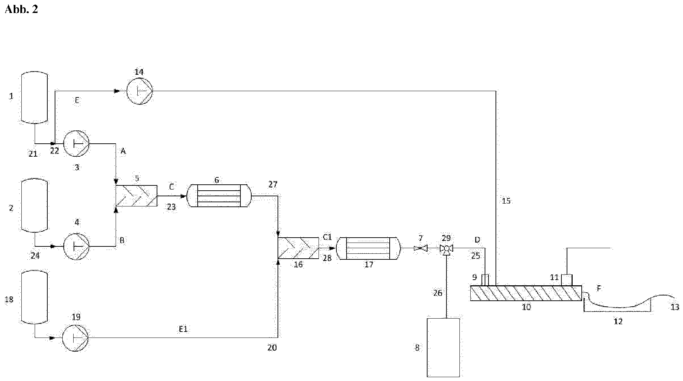

Die vorliegende Erfindung wird im Folgenden anhand der Abbildungen 1 und 2 näher erörtert.

Darin zeigt

Abb.1 eine bevorzugte Vorrichtung zur Durchführung des erfindungsgemäßen Verfahrens, sowie
Abb.2 eine weitere bevorzugte Vorrichtung zur Durchführung des erfindungsgemäßen Verfahrens

**Beispiele**

Alle Prozentangaben beziehen sich, soweit nichts Anderslautendes vermerkt, auf das Gewicht.

**Verwendete Rohstoffe:**

1,6-Hexamethylendiisocyanat (HDI), 1,5-Pentamethylendiisocyanat (PDI), Isophorondiisocyanat (IPDI), 4,4'-Diisocyanatodicyclohexylmethan (H12MDI) und Xylylendiisocyanat (XDI) wurden von der Covestro AG bezogen.

1,4-Butandiol (BDO) wurde von der Firma Ashland bezogen. 1,3-Propandiol (PDO), 1,6-Hexandiol (HDO) und 1,4-Cyclohexandimethanol wurden von der Firma Sigma-Aldrich bezogen. Die Reinheit der Rohstoffe lag jeweils bei $\geq$ 99 %.

**Differential Scanning Calorimetrie (DSC)**

Der Schmelzpunkt wurde mittels DSC (Differential Scanning Calorimetrie) mit einem Mettler DSC 12E (Mettler Toledo GmbH, Gießen, DE) entsprechend DIN EN 61006 (November 2004) bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 20 K/min. Die Kühlung erfolgte durch flüssigen Stickstoff. Als Spülgas wurde Stickstoff verwendet. Die angegebenen Werte basieren jeweils auf der Auswertung der 2. Aufheizkurve.

**Farbwerte**

Die Farbwerte im CIE-Lab Farbraum wurden mit einem Konica Minolta CM5 Spektralphotometer, mit der Lichtart D 65, bei 10° Beobachter gemäß DIN EN ISO 11664-1 (Juli 2011) bestimmt.

**Screening Differenz-Thermoanalyse (DTA)**

Die Reaktionsenthalpie wurden mittels einer Screening-DTA ermittelt in einem nach ISO 17025 akkreditierten Labor durchgeführt. Die Proben wurden in Glasampullen eingewogen, gasdicht versiegelt und im Messgerät mit 3 K/min von -50 °C bis +450 °C erwärmt. Mittels Thermoelementen wurde die Differenz zwischen der Probentemperatur und der Temperatur einer inerten Referenz (Aluminiumoxid) bestimmt. Die Einwaage lag bei 20 mg bis 30 mg. Alle Messungen wurden nach DIN 51007 (Juni 1994) durchgeführt. Der Messfehler des Geräts liegt bei $\pm 2\%$.

Für die equimolare Kombination von 1,4-Butandiol mit 1,6-Hexamethylendiisocyanat wurde eine Reaktionsenthalpie von -690 kJ/kg gemessen.

**Vergleichsbeispiel:**

In einem mit Stickstoff inertisierten 51 Druckkessel mit Ankerrührer, Bodenablass und Innenthermometer wurden 1,4-Butandiol (1,35 kg) unter Stickstoff (1 bar) vorgelegt und unter Wärmezufuhr gerührt, bis eine Innentemperatur von 90 °C erreicht wurde. Über einen Zeitraum von 2 h wurde anschließend die Gesamtmenge an 1,6-Hexamethylendiisocyanat kontinuierlich in den Druckkessel dosiert (2,5 kg), während gleichzeitig die Reaktortemperatur kontinuierlich bis auf 190 °C erhöht wurde. Die Temperatur des Reaktionsgemischs lag aufgrund der freiwerdenden Reaktionswärme der Polyaddition über die gesamte Reaktionszeit bis zu 15 °C oberhalb der jeweiligen vorgegebenen Reaktortemperatur. Nach Beendigung der Zugabe von 1,6-Hexamethylendiisocyanat wurde noch weitere 10 Minuten bei 200 °C gerührt. Während dieser Zeit wurde ein Anstieg der Viskosität auf 106 Pa*s (Frequenz von 1Hz, Rheometer: Anton Paar MCR-302; Messung nach ISO 6721-10 (September 2015)) detektiert. Dieser Anstieg der Viskosität führte zu einem Ausfall des Rührers. Aufgrund der hohen Viskosität war ein Austrag des Polymers aus dem Druckkessel nicht möglich.

Der Schmelzpunkt des Polymers beträgt 174,9 °C (DSC 2.Aufheizung nach Abkühlung mit 20 K/min).

**Erfindungsgemäßes Beispiel 1 (Abbildung 1):**

Aus Vorlage 1 wurden 301 g/h 1,6-Hexamethylendiisocyanat mit der Pumpe 3 (Typ: SyrDos2 mit 10 mL Spritzen der Firma HiTec Zang) durch die Polyisocyanatleitung 21 in die erste Mischungseinrichtung 5 gefördert. Zeitgleich wurden aus Vorlage 2 202 g/h 1,4-Butandiol mit der Pumpe 4 (Typ: SyrDos2 mit 10 mL Spritzen der Firma HiTec Zang) durch die Polyolleitung 24 ebenfalls in die erste Mischungseinrichtung 5 gefördert. Die erste Mischungseinrichtung 5 wurde durch Heizbänder auf eine Temperatur von 120 °C beheizt. Als erste Mischungseinrichtung 5 wurde ein Kaskadenmischer der Firma Ehrfeld Microtechnik BTS GmbH verwendet. Der erste Mischungsstrom C wurde anschließend durch die ebenfalls durch Heizbänder auf 120 °C temperierte Zuführungsleitung 23 in den auf 173 °C temperierten Statikmischer 6 (Typ CSE-X/8G, Form G, Innendurchmesser = 12,3 mm, Länge = 500 mm der Firma Fluitec, Wärmeaustauschvermögen von 60 Kilowatt pro Kubikmeter und Kelvin) geleitet. Die Verweilzeit im Statikmischer 6 betrug 5 min. Das aus dem Statikmischer 6 kontinuierlich austretende Prepolymer wurde durch eine auf 200 °C beheizte Prepolymerzuführungsleitung 25 in das zweite Gehäuse eines 2-Wellen Extruders 10 (Miniextruder Process 11/Thermo Fisher) überführt. Der Extruder 10 wurde über seine gesamte Länge auf 200 °C beheizt und die Drehzahl der Wellen betrug 100 U/min. Anschließend wurden durch die Polyisocyanatzuführungsleitung 15 in Gehäuse 3 des Extruders 10 72 g/h 1,6-Hexamethylendiisocyanat mit der Pumpe 14 (Typ: SyrDos2 mit 10 mL Spritzen der Firma HiTec Zang) gefördert. Das entstandene milchig-weiße Produkt wurde durch die Extruderdüsen ausgetragen, als Strang abgezogen, in einem Wasserbad 12 bei 25 °C gekühlt und im Granulator 13 granuliert.

Die Temperatur des Prepolymerstroms D am Ausgang des Statikmischers 6 betrug 176 °C und damit nur 3 °C über der eingestellten Temperatur des Statikmischers 6.

Die durch die Reaktion freiwerdende Energie beträgt bei einer Reaktionsenthalpie von 89 kJ/mol Isocyanat 573 kJ/kg. Damit beträgt die adiabate Temperaturerhöhung 287 K bei einer Wärmekapazität von 2000 kJ/kg.

Der gemessene Temperaturanstieg betrug also nur ca. 20 % des berechneten adiabatischen Temperaturanstiegs. Somit wurden ca. 80 % der im Statikmischer 6 freigesetzten Reaktionsenthalpie abgeführt.

Die mittlere Verweilzeit über alle Verfahrensstufen betrug ca. 6 Minuten. Der Schmelzpunkt des hergestellten Polymers beträgt 182,9 °C (DSC, 2. Aufheizung nach Abkühlung mit 20 K/min). Der L*-Wert beträgt 82,7, der b*-Wert beträgt 0,2.

**Erfindungsgemäßes Beispiel 2 (Abbildung 2):**

Aus einer 250-Liter-Vorlage für 1,6-Hexamethylendiisocyanat 1 wurde mit Hilfe einer Zahnringpumpe 3 (Firma HNP, MZR 7255) ein 1,6-Hexamethylendiisocyanat-Strom A zu einer ersten Mischungseinrichtung 5 gefördert. Der Durchsatz des 1,6-Hexamethylendiisocyanat-Stroms A wurde mittels eines Massedurchflussmessers (Firma Bronkhorst, Mini Cori-Flow M1X, max. Durchfluss 12 kg/h) gemessen und auf einen Wert von 1,680 kg/h eingeregelt. Aus einer 250-Liter-Vorlage für 1,4-Butandiol 2 wurde mit Hilfe einer Zahnringpumpe 4 (Firma HNP, MZR 7205) ein 1,4-Butandiol-Strom B zur ersten Mischungseinrichtung 5 gefördert. Der Durchsatz des 1,4-Butandiol-Stroms wurde mittels eines Massedurchflussmessers (Firma Bronkhorst, Mini Cori-Flow M1X, max. Durchfluss 8 kg/h) gemessen und auf einen Wert von 2,000 kg/h eingeregelt. Die Temperatur des 1,6-Hexamethylendiisocyanats betrug dabei Umgebungstemperatur, ca. 20 °C. Die Temperatur des 1,4-Butandiols betrug 40 °C. In der ersten Mischungseinrichtung 5 (Statikmischer, Sulzer SMX, Durchmesser 6 mm, Verhältnis von Länge zu Durchmesser L/D = 10) wurden der 1,6-Hexamethylendiisocyanat-Strom A und der 1,4-Butandiol-Strom B miteinander gemischt. Dies ist der Strom C.

Der gemischte und dispergierte Strom C wurde durch die Zuführungsleitung 23 in einen ersten Statikmischer 6 (Fluitec-Mischer-Wärmetauscher Typ CSE-X/8G, Innendurchmesser = 21 mm, Länge = 1525 mm) geführt. Die Temperatur des Stromes C betrug bei Eingang in den ersten Statikmischer 6 31 °C und bei Ausgang aus dem ersten Statikmischer 6 178 °C. Der gemischte und weitgehend reagierte Strom C wurde durch die temperierbare Leitung 27 in die weitere Mischungseinrichtung 16 geführt. Aus einer 250-Liter-Vorlage für 1,6-Hexamethylendiisocyanat 1 (entspricht 18 in Abbildung 2) wurde mit Hilfe einer Zahnringpumpe 19 (Firma HNP, MZR 7255) ein 1,6-Hexamethylendiisocyanat-Strom E1 zu der weiteren Mischungseinrichtung 16 gefördert und auf eine Temperatur von 105 °C vorgeheizt. Der Durchsatz des 1,6-Hexamethylendiisocyanat-Stroms E1 wurde mittels eines Massedurchflussmessers (Firma Bronkhorst, Mini Cori-Flow M1X, max. Durchfluss 12 kg/h) gemessen und auf einen Wert von 1,120 kg/h eingeregelt. In der weiteren Mischungseinrichtung 16 (Statikmischer, Sulzer SMX, Durchmesser 6 mm, Verhältnis von Länge zu Durchmesser L/D = 10) wurden der 1 Mischungsstrom C und der 1,6-Hexamethylendiisocyanat-Strom E1 miteinander gemischt. Dies ist der Strom C1.

Der Strom C1 wurde durch die Zuführungsleitung 28 in einen weiteren Statikmischer 17 (Fluitec-Mischer-Wärmetauscher Typ CSE-X/8G, Innendurchmesser = 21 mm, Länge = 1025 mm) geführt. Die Temperatur des Stromes C1 betrug bei Eingang in den weiteren Statikmischer 17 182 °C und bei Ausgang aus dem weiteren Statikmischer 17 176 °C.

Die mittlere kalorische Temperatur aller Eingangsströme in die beiden Statikmischer betrug 47 °C. Die spezifische Reaktionsenthalpie betrug 617 kJ/kg, was zu einer adiabatischen Temperaturerhöhung von 308 K geführt hätte. Die tatsächliche Temperaturerhöhung betrug 129 K, also wurden ca. 60 % der Reaktionsenthalpie abgeführt.

Der Prepolymerstrom D wurde durch die Prepolymerzuführungsleitung 25 in den Extruder 10 geführt. Die Prepolymerzuführungsleitung 25 war doppelwandig ausgeführt und wurde mit Thermoöl beheizt. Die Heizmitteltemperatur betrug 185 °C. Aus der 1,6-Hexamethylendiisocyanat-Vorlage 1 wurde mit Hilfe einer Mikrozahnringpumpe 14 (MZR 6355 der Firma HNP) ein 1,6-Hexamethylendiisocyanat-Strom E entnommen. Der Durchsatz des 1,6-Hexamethylendiisocyanat-Stroms E wurde mittels eines Massedurchflussmessers (Firma Bronkhorst, Mini Cori-Flow, M1X, maximaler Durchfluss 2 kg/h) gemessen und auf 0,0,859 Kilogramm pro Stunde eingeregelt. Die Temperatur des 1,6-Hexamethylendiisocyanat-Stroms (E) betrug ebenfalls Raumtemperatur, etwa 20 °C. Dieser Strom wurde über die Polyisocyanatzuführungsleitung 15 auf den Extruder 10 geleitet.

Der Extruder 10 war eine ZSK 26 MC der Firma Coperion, der bei Temperaturen von 200 °C und einer Drehzahl von 66 Umdrehungen pro Minute betrieben wurde. Auf diesem Extruder wurde der Strom D über eine Entlüftungseinrichtung 9, die bei ca. 1 mbar Unterdruck gegenüber dem Umgebungsdruck betrieben wurde, von eventuell mit den Stoffströmen A, B und E1 eingeschleppten Inertgasen und möglichen flüchtigen Reaktionsprodukten befreit. Stromab von der Zugabe des Prepolymerstroms D wurde der 1,6-Hexamethylendiisocyanat-Strom E zugegeben und die Reaktion zum Polymer durchgeführt. Vor Ende des Extruders wurde der entstehende Polymerstrom über eine Entgasung 11 von flüchtigen Bestandteilen befreit. Der Druck in dieser Entgasung 11 betrug 400 mbar unter Umgebungsdruck. Der Polymerstrom wurde durch zwei Düsen ausgepresst, in einem mit VE-Wasser gefüllten Wasserbad 12 abgekühlt und durch einen Granulator 13 zu Granulat zerschnitten.

Die mittlere Verweilzeit über alle Verfahrensstufen betrug 51 Minuten. Der Schmelzpunkt des Polymers beträgt 185,2 °C (DSC, 2. Aufheizung nach Abkühlung mit 20 K/min). Der L*-Wert beträgt 82,1, der b*-Wert beträgt 0,1.

### Bezugszeichenliste

| | |
|---|---|
| (A) | Polyisocyanatstrom |
| (B) | Diolstrom |
| (C) | Mischungsstrom |
| (C1) | weiterer Mischungsstrom |
| (D) | Prepolymerstrom |
| (E) | Polyisocyanatzuführungsstrom |
| (E1) | weiterer Polyisocyanatzuführungsstrom |
| (F) | thermoplastisches Polyurethan |
| (1) | Polyisocyanat-Vorratsbehälter |
| (2) | Diol-Vorratsbehälter |
| (3) | erste Fördereinrichtung |
| (4) | zweite Fördereinrichtung |
| (5) | erste Mischungseinrichtung |
| (6) | erster Statikmischer |
| (7) | Druckregelventil |
| (8) | Abfallbehälter |
| (9) | Entlüftungseinrichtung |
| (10) | Extruder |
| (11) | Entgasungsschacht |
| (12) | Kühlungseinrichtung |
| (13) | Zerkleinerungseinrichtung |
| (14) | dritte Fördereinrichtung |
| (15) | Polyisocyanatzuführungsleitung |

(16)    weitere Mischungseinrichtung
(17)    weiterer Statikmischer
(18)    weiterer Polyisocyanat-Vorratsbehälter
(19)    vierte Fördereinrichtung
(20)    weitere Polyisocyanatzuführungsleitung
(21)    Polyisocyanatleitung
(22)    erste Einmündung
(23)    Zuführungsleitung
(24)    Polyolleitung
(25)    Prepolymerzuführungsleitung
(26)    Abfallleitung
(27)    Leitung
(28)    Zuführungsleitung
(29)    Dreiwegeventil


**Patentansprüche**

1.    Verfahren zur kontinuierlichen lösungsmittelfreien Herstellung eines thermoplastischen Polyurethans (F) durch Umsetzung der Komponenten

   (α) einem oder mehreren cycloaliphatischen, aliphatischen und/oder araliphatischen Polyisocyanaten,
   (β) einem oder mehreren cycloaliphatischen, aliphatischen und/oder araliphatischen Diolen, wobei die Gesamtmenge der Komponente (β) eine Hydroxylzahl im Bereich von 600 mg KOH/g bis 1830 mg KOH/g bestimmt gemäß DIN EN ISO 4629-2:2016 aufweist,
   (γ) gegebenenfalls in Gegenwart von einem oder mehreren Katalysatoren, und/oder einem oder mehreren Zusatzstoffen,

   umfassend die folgenden Schritte:

   f) Mischen eines Polyisocyanatstroms (A) und eines Diolstroms (B) in einer ersten Mischungseinrichtung (5), so dass ein erster Mischungsstrom (C) erhalten wird, wobei die Massenströme des Polyisocyanatstroms (A) und des Diolstroms (B) so eingestellt werden, dass der Isocyanat-Index im Mischungsstrom (C) im Bereich von 55 bis 85 liegt,
   g) Einleiten des ersten Mischungsstroms (C) in mindestens einen ersten Statikmischer (6) der mindestens einen Wärmeübertrager aufweist, wobei die Monomere des Polyisocyanatstroms (A) und des Diolstroms (B) in dem mindestens ersten Statikmischer (6) zumindest teilweise zu OH-funktionellen Prepolymeren weiterreagieren,
   h) Einleiten des Massestroms aus Verfahrensschritt b) als Prepolymerstrom (D) in einen Extruder (10),
   i) Einleiten eines Polyisocyanatzuführungsstroms (E) in den Extruder (10) in Extruderarbeitsrichtung stromabwärts der Einleitung des Prepolymerstroms (D), wobei die Einleitung in der Weise erfolgt, dass die im Prepolymerstrom (D) enthaltenen OH-funktionellen Prepolymere und das im Polyisocyanatzuführungsstrom (E) enthaltene Polyisocyanat in einem Isocyanat-Index im Bereich von 85 bis 120 zueinander stehen,
   j) Umsetzen des Prepolymerstroms (D) mit dem Polyisocyanatzuführungsstrom (E) in dem Extruder (10) unter Erhalt des thermoplastischen Polyurethans (F) als Extrudat,

   wobei der Isocyanatstrom (A) und der Polyisocyanatzuführungsstroms (E) jeweils unabhängig voneinander die Komponente (α) und gegebenenfalls die Komponente (γ) enthalten und wobei der Diolstroms (B) die Komponente (β) und gegebenenfalls die Komponente (γ) enthält.

2.    Verfahren nach Anspruch 1, **dadurch gekennzeichnet, dass** in Verfahrensschritt b) auf den ersten Statikmischer (6) mindestens ein weiterer Statikmischer (17) folgt, wobei der mindestens eine weitere Statikmischer (17) mindestens einen Wärmeübertrager aufweist.

3.    Verfahren nach Anspruch 2, **dadurch gekennzeichnet, dass** der Massestrom aus dem mindestens ersten Statikmischer (6) vor dem Einleiten in den mindestens einen weiteren Statikmischer (17) mit einem weiteren Polyisocyanatzuführungsstrom (E1) in einer weiteren Mischungseinrichtung (16) gemischt wird, sodass ein zweiter Mischungsstrom (C1) erhalten wird, wobei der Polyisocyanatzuführungsstrom (E1) die Komponente (a) und gegebenenfalls die Komponente (γ) enthält.

**4.** Verfahren nach 2 oder 3, **dadurch gekennzeichnet, dass** der Massestrom aus dem jeweils vorherigen Statikmischer jedes Mal vor dem Eintritt in einen darauffolgenden Statikmischer mit einem weiteren Polyisocyanatzuführungsstrom (En) in einer weiteren Mischungseinrichtung gemischt wird, sodass ein weiterer Mischungsstrom (Cn) erhalten wird, wobei jeder weitere Polyisocyanatzuführungsstrom (En) die Komponente (a) und gegebenenfalls die Komponente (γ) enthält und wobei jeder Statikmischer vorzugsweise mindestens einen Wärmeübertrager aufweist.

**5.** Verfahren nach einem der Ansprüche 2 bis 4, **dadurch gekennzeichnet, dass** in Verfahrensschritt b) alle Statikmischer in Reihe geschaltet sind.

**6.** Verfahren nach einem der Ansprüche 1 bis 5, **dadurch gekennzeichnet, dass** sich der mindestens eine Wärmeübertrager oder die Gesamtheit aller Wärmeübertrager eines Statikmischers, sich jeweils über die gesamte Länge des Statikmischers erstrecken.

**7.** Verfahren nach einem der Ansprüche 1 bis 6, **dadurch gekennzeichnet, dass** der mindestens erste Statikmischer (6) und jeder weitere Statikmischer aus Verfahrensschritt b) einen oder mehrere Abschnitte aufweist, die jeweils unabhängig voneinander temperiert sind, vorzugsweise wobei der erste Abschnitt des Statikmischers die niedrigste Temperatur aufweist, besonders bevorzugt wobei der erste Abschnitt des Statikmischers die niedrigste Temperatur aufweist und alle darauf folgenden Abschnitte des Statikmischers jeweils eine höhere Temperatur aufweisen als der jeweils vorherige Abschnitt.

**8.** Verfahren nach einem der Ansprüche 1 bis 7, **dadurch gekennzeichnet, dass** die durch den mindestens einen Wärmeübertrager oder die Gesamtheit der Wärmeübertrager abgeführte Wärme je Statikmischer im Bereich von 10 % bis 90 %, vorzugsweise im Bereich von 20 % bis 90 %, besonders bevorzugt im Bereich von 25 % bis 85 % der in dem jeweiligen Statikmischer freigesetzten gesamten Reaktionsenthalpie beträgt.

**9.** Verfahren nach einem der Ansprüche 1 bis 8, **dadurch gekennzeichnet, dass** der erste Mischungsstrom (C) vor Eintritt in den mindestens ersten Statikmischer (6) eine mittlere kalorische Temperatur im Bereich von 0 °C bis 80 °C, vorzugsweise im Bereich von 10 °C bis 60 °C, besonders bevorzugt im Bereich von 20 °C bis 50 °C aufweist.

**10.** Verfahren nach einem der Ansprüche 1 bis 9, **dadurch gekennzeichnet, dass** der zweite Mischungsstrom (C1) vor Eintritt in den mindestens einen weiteren Statikmischer (17) eine mittlere kalorische Temperatur im Bereich von 70 °C bis 240 °C, vorzugsweise im Bereich von 90 °C bis 220 °C, besonders bevorzugter im Bereich 110 °C bis 200 °C aufweist.

**11.** Verfahren nach einem der Ansprüche 1 bis 10, **dadurch gekennzeichnet, dass** vor dem Einleiten des Prepolymerstroms (D) in den Extruder aus dem Prepolymerstrom (D) Gase und gasförmige Nebenprodukte entfernt werden, bevorzugt indem der Prepolymerstrom (D) durch eine Entlüftungseinrichtung (9) mit einem Unterdruck von 0,1 mbar bis 10 mbar unter Normaldruck geführt wird, wobei die Entlüftungseinrichtung (9) vorzugsweise an dem Extruder (10) funktional angeordnet ist.

**12.** Verfahren nach einem der Ansprüche 1 bis 11, **dadurch gekennzeichnet, dass** die Umsetzung in Schritt e) bei einer Temperatur im Bereich von 150 °C bis 280 °C, vorzugsweise im Bereich 180 °C bis 260 °C, besonders bevorzugt im Bereich von 190 °C bis 250 °C durchgeführt wird.

**13.** Verfahren nach einem der Ansprüche 1 bis 12, **dadurch gekennzeichnet, dass** aus dem thermoplastischen Polyurethan (F) Gase und gasförmige Nebenprodukte entfernt werden, indem ein Unterdruck im Bereich von 50 mbar bis 500 mbar unter Normaldruck an einem Entgasungsschacht (11) angelegt wird, der bevorzugt in Extruderarbeitsrichtung im letzten Drittel des Extruders (10) angeordnet ist.

**14.** Verfahren nach einem der Ansprüche 1 bis 13, **dadurch gekennzeichnet, dass** als Komponente (a) ein oder mehrere aliphatische, cycloaliphatische oder araliphatische monomere Diisocyanate eingesetzt werden, vorzugsweise ein oder mehrere aliphatische und / oder cycloaliphatische monomere Diisocyanate eingesetzt werden, besonders bevorzugt ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus, noch bevorzugter das als Komponente (a) 1,5-Diisocyanatopentan (PDI), 1,6-Diisocyanatohexan (HDI) eingesetzt werden und am Bevorzugtesten das als Komponente (a) 1,6-Diisocyanatohexan (HDI) eingesetzt wird.

**15.** Verfahren nach einem der Ansprüche 1 bis 14, **dadurch gekennzeichnet, dass** als Komponente (β) ein oder mehrere aliphatische oder cycloaliphatische Diole mit einer Hydroxylzahl im Bereich von 600 mg KOH/g bis 1830 mg KOH/g bestimmt gemäß DIN EN ISO 4629-2:2016, vorzugsweise Diole ausgewählt aus der Gruppe bestehend aus 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus, eingesetzt werden, besonders bevorzugt ein oder mehrere aliphatische Diole mit einer Hydroxylzahl im Bereich von 600 mg KOH/g bis 1830 mg KOH/g bestimmt gemäß DIN EN ISO 4629-2:2016 eingesetzt werden, noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, eingesetzt werden und am bevorzugtesten 1,4-Butandiol eingesetzt wird.

**16.** Thermoplastisches Polyurethan erhältlich oder erhalten durch ein Verfahren nach einem der Ansprüche 1 bis 15.

**17.** Vorrichtung zur Durchführung eines Verfahrens nach einem der Ansprüche 1 bis 15, umfassend:

einen Polyisocyanat-Vorratsbehälter (1), von dem eine Polyisocyanatleitung (21) zur Förderung eines Polyisocyanatstroms (A) abgeht, die in eine erste Mischungseinrichtung (5) mündet;
einen Polyol-Vorratsbehälter (2), von dem eine Polyolleitung (24) zur Förderung eines Diolstroms (B) abgeht, die in die erste Mischungseinrichtung (5) mündet, wobei die Polyolleitung (24) insbesondere stromaufwärts der ersten Mischungseinrichtung (5) mit der Polyisocyanatleitung (21) zusammengeführt wird;
eine Zuführungsleitung (23) zur Förderung eines aus der ersten Mischungseinrichtung (5) austretenden ersten Mischungsstroms (C), die in den mindestens einen ersten Statikmischer (6), zur chemischen Umsetzung der Komponenten des ersten Mischungsstroms (C), mündet;
eine von dem mindestens einen Statikmischer (6) abgehende Leitung (27) zur Förderung des Massestroms aus dem mindestens einen Statikmischer (6);
gegebenenfalls ein weiterer Polyisocyanat-Vorratsbehälter (18) von dem eine weitere Polyisocyanatzuführungsleitung (20) zur Förderung des einen weiteren Polyisocyanatzuführungsstroms (E1) abgeht,
gegebenenfalls eine weitere Mischungseinrichtung (16) in welche die Leitung (27) und die weitere Polyisocyanatzuführungsleitung (20) münden;
gegebenenfalls eine Zuführungsleitung (28) zur Förderung eines aus der weiteren Mischungseinrichtung (16) austretenden zweiten Mischungsstroms (C1), die in den mindestens einen weiteren Statikmischer (17), zur chemischen Umsetzung der Komponenten des zweiten Mischungsstroms (C1), mündet;
eine von dem einen weiteren Statikmischer (17) abgehende Prepolymerzuführungsleitung (25) zur Förderung des Prepolymerstroms (D) aus dem einen weiteren Statikmischer (17), die einlassseitig in einen Extruder (10) mündet;
ein in der Prepolymerzuführungsleitung (25) vorgesehenes Druckregelventil (7) zur Regulierung des Drucks des Prepolymerstroms (D);
ein in der Prepolymerzuführungsleitung (25) angeordnetes und insbesondere stromabwärts des Druckregelventils (7) positioniertes Dreiwegeventil (29), von dem eine in einen Abfallbehälter (8) mündende Abfallleitung (26) abgeht, über die der Prepolymerstrom (D) insbesondere bei Inbetriebnahme, Außerbetriebnahme oder Störung der Vorrichtung ganz oder teilweise in den Abfallbehälter (D) geführt werden kann;
eine vorzugsweise an der Einmündung der Prepolymerzuführungsleitung (25) in den Extruder (10) angeordnete Entlüftungseinrichtung (9) zur Entfernung von Gasen und gasförmigen Nebenprodukten aus dem Prepolymerstrom (D);
eine vom Polyisocyanat-Vorratsbehälter (1) oder der Polyisocyanatleitung (21) abgehende und in Extruderarbeitsrichtung vorzugsweise stromabwärts der Prepolymerzuführungsleitung (15) in den Extruder (10) mündende Polyisocyanatzuführungsleitung (15) zur Förderung eines Polyisocyanatzuführungsstroms (E);
wobei der Extruder (10) zur Umsetzung der Komponenten des Prepolymerstroms (D) mit den Komponenten des Polyisocyanatzuführungsstroms (E) zu einem thermoplastischen Polyurethan (F) geeignet und diesem ein Entgasungsschacht (11) zur Entfernung von Gasen und gasförmigen Nebenprodukten mittels Unterdruck aus dieser Umsetzung zugeordnet ist, wobei der Entgasungsschacht (11) bevorzugt im in Extruderarbeitsrichtung letzten Drittel des Extruders (10) angeordnet ist;
gegebenenfalls eine hinter dem Auslass des Extruders (10) angeordnete Kühlungseinrichtung (12), vorzugsweise ein Wasserbad, zur Abkühlung des thermoplastischen Polyurethans (F) unter seinen Schmelzpunkt;
gegebenenfalls eine sich an die Kühlungseinrichtung (12) anschließende Zerkleinerungseinrichtung (13) zur Zerkleinerung des abgekühlten thermoplastischen Polyurethans (F).

**18.** Vorrichtung nach Anspruch 17, **dadurch gekennzeichnet, dass** als erste Fördereinrichtung (3), als zweite Fördereinrichtung (4), als dritte Fördereinrichtung (14) und/oder als vierte Fördereinrichtung (19) unabhängig voneinander eine Zahnringpumpe eingesetzt wird.

**19.** Vorrichtung nach Anspruch 17 oder 18, **dadurch gekennzeichnet, dass** als erste und/oder weitere Mischungseinrichtung (5, 16) unabhängig voneinander ein Statikmischer eingesetzt wird.

**20.** Vorrichtung nach einem der Ansprüche 17 bis 19, **dadurch gekennzeichnet, dass** der erste Statikmischer (6) und der mindestens eine weitere Statikmischer (17) jeweils unabhängig voneinander einen Wärmeübertrager aufweisen, wobei der Wärmeübertrager vorzugsweise ein Doppelmantel oder innenliegende Wärmeübertragerrohre oder ein Doppelmantel und innenliegende Wärmeübertragerrohre ist, die mit einem Temperiermittel beheizbar sind, wobei das Temperiermittel bevorzugt für einen Temperaturbereich von 160 °C bis 220 °C geeignet ist.

**21.** Vorrichtung einem der Ansprüche 17 bis 20, **dadurch gekennzeichnet, dass** der Extruder (10) ein Planetwalzenextruder oder ein Schneckenextruder ist, wobei der Extruder (10) bevorzugt ein gleichläufiger Doppelschneckenextruder ist.

Abb. 1

Abb. 2

Europäisches
Patentamt

European
Patent Office

Office européen
des brevets

**EUROPÄISCHER RECHERCHENBERICHT**

Nummer der Anmeldung

EP 19 21 6805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 031 588 A1 (BAYER AG) 30. August 2000 (2000-08-30) * Verfahren 1; Anspruch 1; Tabelle 1 * * Absatz [0012] * * Absatz [0027] - Absatz [0034] * ----- | 1-21 | INV. C08G18/10 C08G18/32 C08G18/73 |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 12. Juni 2020 | Sütterlin, Martin |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 6805

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2020

| Im Recherchenbericht angeführtes Patentdokument | Datum der Veröffentlichung | Mitglied(er) der Patentfamilie | Datum der Veröffentlichung |
|---|---|---|---|
| EP 1031588 A1 | 30-08-2000 | AT 281483 T | 15-11-2004 |
| | | BR 0000911 A | 24-10-2000 |
| | | CA 2299079 A1 | 25-08-2000 |
| | | CN 1264720 A | 30-08-2000 |
| | | DE 19907987 A1 | 31-08-2000 |
| | | EP 1031588 A1 | 30-08-2000 |
| | | ES 2231056 T3 | 16-05-2005 |
| | | HK 1028781 A1 | 28-01-2005 |
| | | JP 4725937 B2 | 13-07-2011 |
| | | JP 2000248171 A | 12-09-2000 |
| | | KR 20000058166 A | 25-09-2000 |
| | | TW 591044 B | 11-06-2004 |
| | | US 6218479 B1 | 17-04-2001 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- WO 0114441 A
- EP 0519734 A
- CN 107141437
- CN 105001626
- US 2017145146 A
- DE 2901774 A


**In der Beschreibung aufgeführte Nicht-Patentliteratur**

- High Polymers. **J.H. SAUNDERS ; K.C. FRISCH.** Polyurethane, Teil 1 und 2. Verlag Interscience Publishers, 1962, vol. XVI
- **R. GÄCHTER ; U. H. MÜLLER.** Taschenbuch für Kunststoff-Additive. Hanser Verlag, 1990
- Richmannsche Mischungsregel. Wikipedia, Die freie Enzyklopädie. Bearbeitungsstand. 25. September 2018, vol. 2, 05